# EUROPEAN PATENT APPLICATION

(11) **EP 4 644 398 A1**
(43) Date of publication of application: **05.11.2025**
(21) Application number: 24756879.3
(22) Date of filing: 13.02.2024
(51) Int. Cl.: C07F 7/18, C09K 3/18

(54) **SURFACE TREATMENT AGENT**

(30) Priority: 13.02.2023 JP 2023020363
(71) Applicant: Daikin Industries, Ltd., Osaka-shi, Osaka 530-0001 (JP)
(72) Inventor: KUBOTA, Hiroki, Osaka-Shi, Osaka 530-0001 (JP); TAKANO, Shinya, Osaka-Shi, Osaka 530-0001 (JP); HARA, Manami, Osaka-Shi, Osaka 530-0001 (JP); NOMURA, Takashi, Osaka-Shi, Osaka 530-0001 (JP)
(74) Representative: Hoffmann Eitle
(86) International application number: PCT/JP2024/004860
(87) International publication number: WO 2024/172036

(57) **Abstract**

A fluorine containing silane compound represented by the following formula (1):

Rf_{α1}-X^{A}-R^{Si}_{β1} (1)

wherein
Rf is an aromatic group substituted with a fluorine atom or a fluorine containing substituent,
X^{A} is a single bond or a di- to decavalent group,
R^{Si} is a monovalent group containing a Si atom to which a hydroxyl group or a hydrolyzable group is bonded,
α1 is an integer of 1 to 9, and
β1 is an integer of 1 to 9.

## Description

### Technical Field

The present disclosure relates to a surface-treating agent.

### Background Art

Certain types of silane compounds are known to be capable of providing excellent water- and oil-repellency, when used in surface treatment of a substrate (Patent Literature 1).

### Citation List

### Patent Literature

Patent Literature 1: JP 2019-44179 A

### Summary of Invention

### Technical Problem

An object of the present disclosure is to provide a novel silane compound.

### Solution to Problem

The present disclosure includes the following embodiments.
[1] A fluorine containing silane compound represented by the following formula (1):

   Rf_{α1}-X^{A}-R^{Si}_{β1} (1)

   wherein
   Rf is an aromatic group substituted with a fluorine atom or a fluorine containing substituent,
   X^{A} is a single bond or a di- to decavalent group,
   R^{si} is a monovalent group containing a Si atom to which a hydroxyl group or a hydrolyzable group is bonded,
   α1 is an integer of 1 to 9, and
   β1 is an integer of 1 to 9.
[2] The fluorine containing silane compound according to [1], wherein Rf is an aromatic group substituted with a fluorine atom, a fluoroalkyl group, a fluoroalkoxy group, R^{N}HN- or R^{N}₂N-, wherein R^{N} is fluoroalkyl.
[3] The fluorine containing silane compound according to [1] or [2], wherein Rf is an aromatic group substituted with a fluorine atom.
[4] The fluorine containing silane compound according to any one of [1] to [3], wherein Rf is an aromatic group substituted with a C₁₋₆ fluoroalkyl group or a C₁₋₆ fluoroalkoxy group, R^{N}HN- or R^{N}₂N-, wherein R^{N} is a fluoroalkyl group.
[5] The fluorine containing silane compound according to any one of [1] to [4], wherein the aromatic group in Rf has a benzene ring, a naphthalene ring, a phenanthrene ring, an anthracene ring, a tetracene ring, a pentacene ring, a benzopyrene ring, a chrysene ring, a pyrene ring, a triphenylene ring, a corannulene ring, an ovalene ring, an indole ring, a furan ring, a thiophene ring, a pyrrole ring, a pyrazole ring, an imidazole ring, a pyridine ring, a pyridazine ring, a pyrimidine ring, a pyrazine ring, a biphenyl ring, a terphenyl ring, a triphenylmethane ring, or a benzophenone ring.
[6] The fluorine containing silane compound according to any one of [1] to [5], wherein Rf is a phenyl group substituted with a fluorine atom, a C₁₋₆ fluoroalkyl group or a C₁₋₆ fluoroalkoxy group, R^{N}HN- or R^{N}₂N-, wherein R^{N} is a fluoroalkyl group.
[7] The fluorine containing silane compound according to any one of [1] to [6], wherein X^{A} is represented by the following formula:

   -X^{B}-X^{C}-X^{D}-X^{E}-X^{F}-

   wherein
   X^{B} is a single bond, a C₁₋₃₀ alkylene group, or a C₂₋₃₀ alkenylene group,
   X^{C} is a single bond or a divalent group,
   X^{D} is a divalent siloxane containing group, or group represented by the following formula:

      -(CFH)ₐ-(CH₂)_{b}-(O)_{c}-

      wherein
   a is an integer of 0 to 200,
   b is an integer of 0 to 200,
   c is an integer of 0 to 200, and
   the occurrence order of the respective repeating units enclosed in parentheses provided with a, b, and c is not limited,
   X^{E} is a single bond or a divalent group, and
   X^{F} is a single bond, a C₁₋₃₀ alkylene group, or a C₂₋₃₀ alkenylene group.
[8] The fluorine containing silane compound according to [7], wherein X^{C} is a single bond, an oxygen atom, a sulfur atom, an o-, m- or p-phenylene group, -CO-, - C(O)O-, -OC(O)-, -CONR⁵⁴-, -NR⁵⁴CO-, -O-CONR⁵⁴-, -NR⁵⁴COO-, -NR⁵⁴CONR⁵⁴-, -NR⁵⁴-, or -(CH₂)ₙ₅-,
   R⁵⁴ is each independently at each occurrence a hydrogen atom or a monovalent organic group, and
   n5 is each independently at each occurrence an integer of 1 to 30.
[9] The fluorine containing silane compound according to [7] or [8], wherein X^{E} is a single bond, an oxygen atom, a sulfur atom, an o-, m- or p-phenylene group, -CO-, - C(O)O-, -OC(O)-, -CONR⁵⁴-, -NR⁵⁴CO-, -O-CONR⁵⁴-, -NR⁵⁴CO-0-, -NR⁵⁴CONR⁵⁴-, -NR⁵⁴-, or -(CH₂)ₙ₅-,
   R⁵⁴ is each independently at each occurrence a hydrogen atom or a monovalent organic group, and
   n5 is each independently at each occurrence an integer of 1 to 30.
[10] The fluorine containing silane compound according to any one of [7] to [9], wherein X^{D} is represented by the following formula: 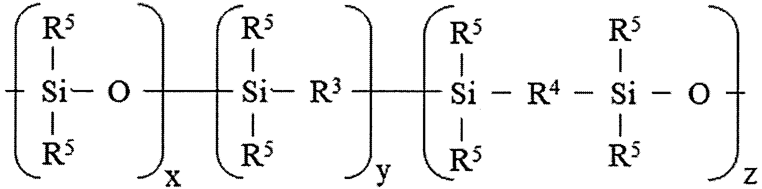 wherein
   R³ is each independently a C₁₋₁₂ alkylene group, -R⁶-O-R⁶-, -R⁸-R⁷-R⁸-, -R⁸-R⁷-R⁹-R⁷-R⁸-, -R⁸-R⁷-R⁹-R⁶-R⁹-R⁷-R⁸-, or -R⁹-R⁶-R⁹-R⁷-R⁹-R⁶-R⁹-,
   R⁴ is each independently a C₁₋₁₂ alkylene group, -R⁶-O-R⁶-, -R⁸-R⁷-R⁸-, -R⁸-R⁷-R⁹-R⁷-R⁸-, -R⁸-R⁷-R⁹-R⁶-R⁹-R⁷-R⁸-, or -R⁹-R⁶-R⁹-R⁷-R⁹-R⁶-R⁹-,
   R⁶ is each independently a C₁₋₆ alkylene group,
   R⁷ is each independently an optionally substituted phenylene group or naphthylene group,
   R⁸ is each independently a single bond or a C₁₋₆ alkylene group,
   R⁹ is each independently a single bond or an oxygen atom,
   R⁵ is each independently a hydrocarbon group,
   x is an integer of 0 to 200,
   y is an integer of 0 to 200,
   z is an integer of 0 to 200,
   x + y + z is 1 or more, and
   the occurrence order of the respective repeating units enclosed in parentheses provided with x, y, or z is not limited in the formula.
[11] The fluorine containing silane compound according to any one of [7] to [9], wherein X^{D} is a group represented by the formula:

   - (CFH)ₓ-(CH₂)_{y}-(O)_{z}-

   wherein
   x is an integer of 0 to 200,
   y is an integer of 0 to 200,
   z is an integer of 0 to 200, and
   the occurrence order of the respective repeating units enclosed in parentheses provided with x, y, and z is not limited.
[12] The fluorine containing silane compound according to any one of [7] to [9], wherein X^{D} is a C₁₋₃₆ alkylene group.
[13] The fluorine containing silane compound according to any one of [7] to [9], wherein X^{D} is a group represented by the following formula:

   -(OR⁶¹)_{f}-

   wherein
   R⁶¹ is a C₁₋₆ alkylene group, and
   f is an integer of 2 to 30.
[14] The fluorine containing silane compound according to any one of [1] to [6], wherein X^{A} is each independently a group represented by the following: 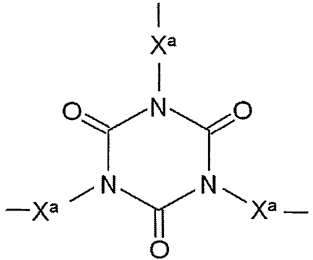 wherein X^{a} is a single bond or a divalent organic group.
[15] The fluorine containing silane compound according to any one of [1] to [14], wherein R^{Si} is represented by the following formula (S1), (S2), (S3), (S4) or (S5):

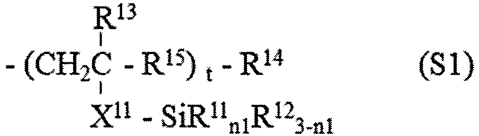

   - SiR¹¹ₙ₁R¹²₃₋ₙ₁ (S2)

   - SiR^{a1}ₖ₁^{Rb1}ₗ₁R^{c1}ₘ₁ (S3)

   - CR^{d1}ₖ₂R^{e1}ₗ₂R^{f1}ₘ₂ (S4)

   - NR^{g1}R^{h1} (S5)

   wherein
   R¹¹ is each independently a hydroxyl group or a hydrolyzable group,
   R¹² is each independently a monovalent organic group,
   n1 is each independently an integer of 0 to 3 for each (SiR¹¹ₙ₁R¹²₃₋ₙ₁) unit,
   X¹¹ is each independently a single bond or a divalent organic group,
   R¹³ is each independently a hydrogen atom or a monovalent organic group,
   t is each independently an integer of 2 or more,
   R¹⁴ is each independently a hydrogen atom, a halogen atom, or -X¹¹-SiR¹¹ₙ₁R¹²₃₋ₙ₁,
   R¹⁵ is each independently a single bond, an oxygen atom, an alkylene group having 1 to 6 carbon atoms, or an alkyleneoxy group having 1 to 6 carbon atoms,
   R^{a1} is each independently -Z¹-SiR²¹ₚ₁R²²_{q1}R²³ᵣ₁,
   Z¹ is each independently a divalent organic group,
   R²¹ is each independently -Z^{1'}-SiR^{21'}_{p1'}R^{22'}_{q1'}R^{23'}_{r1'},
   R²² is each independently a hydroxyl group or a hydrolyzable group,
   R²³ is each independently a monovalent organic group,
   p1 is each independently an integer of 0 to 3,
   q1 is each independently an integer of 0 to 3,
   r1 is each independently an integer of 0 to 3,
   Z^{1'} is each independently a divalent organic group,
   R^{21'} is each independently -Z^{1"}-SiR^{22"}_{q1"}R^{23"}_{r1"},
   R^{22'} is each independently a hydroxyl group or a hydrolyzable group,
   R^{23'} is each independently a monovalent organic group,
   p1' is each independently an integer of 0 to 3,
   q1' is each independently an integer of 0 to 3,
   r1' is each independently an integer of 0 to 3,
   Z^{1"} is each independently a divalent organic group,
   R^{22"} is each independently a hydroxyl group or a hydrolyzable group,
   R^{23"} is each independently a monovalent organic group,
   q1" is each independently an integer of 0 to 3,
   r1" is each independently an integer of 0 to 3,
   R^{b1} is each independently a hydroxyl group or a hydrolyzable group,
   R^{c1} is each independently a monovalent organic group,
   k1 is each independently an integer of 0 to 3,
   11 is each independently an integer of 0 to 3,
   m1 is each independently an integer of 0 to 3,
   provided that, in the formula (S3), at least two Si atoms to which a hydroxyl group or a hydrolyzable group is bonded are present,
   R^{d1} is each independently -Z²-CR³¹ₚ₂R³²_{q2}R³³ᵣ₂,
   Z² is each independently a single bond, an oxygen atom, or a divalent organic group,
   R³¹ is each independently -Z^{2'}-CR^{32'}_{q2'}R^{33'}_{r2'},
   R³² is each independently -Z³-SiR³⁴ₙ₂R³⁵₃₋ₙ₂,
   R³³ is each independently a hydrogen atom, a hydroxyl group, or a monovalent organic group,
   p2 is each independently an integer of 0 to 3,
   q2 is each independently an integer of 0 to 3,
   r2 is each independently an integer of 0 to 3,
   Z^{2'} is each independently a single bond, an oxygen atom, or a divalent organic group,
   R^{32'} is each independently -Z³-SiR³⁴ₙ₂R³⁵₃₋ₙ₂,
   R^{33'} is each independently a hydrogen atom, a hydroxyl group, or a monovalent organic group,
   q2' is each independently an integer of 0 to 3,
   r2' is each independently an integer of 0 to 3,
   Z³ is each independently a single bond, an oxygen atom, or a divalent organic group,
   R³⁴ is each independently a hydroxyl group or a hydrolyzable group,
   R³⁵ is each independently a monovalent organic group,
   n2 is each independently an integer of 0 to 3,
   R^{e1} is each independently -Z³-SiR³⁴ₙ₂R³⁵₃₋ₙ₂,
   R^{f1} is each independently a hydrogen atom, a hydroxyl group, or a monovalent organic group,
   k2 is each independently an integer of 0 to 3,
   12 is each independently an integer of 0 to 3,
   m2 is each independently an integer of 0 to 3,
   provided that, in the formula (S4), at least two Si atoms to which a hydroxyl group or a hydrolyzable group is bonded are present,
   R^{g1} and R^{h1} are each independently -Z⁴-SiR¹¹ₙ₁R¹²₃₋ₙ₁, - Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂, and
   Z⁴ is each independently a single bond, an oxygen atom, or a divalent organic group,
   provided that, in the formula (S5), at least two Si atoms to which a hydroxyl group or a hydrolyzable group is bonded are present.
[16] The fluorine containing silane compound according to [1], wherein Rf is C₆F₅-,
   X^{A} is a C₁₁₋₃₀ alkylene group, or a group represented by the following formula:

      -X^{C}-X^{D}-X^{E}-

      wherein
   X^{C} is -CONH-,
   X^{D} is a C₈₋₃₀ alkylene group, and
   X^{E} is -CO-,
   R^{Si} is a group represented by the following formula (S2) or (S5):

      - SiR¹¹ₙ₁R¹²₃₋ₙ₁ (S2)

      **-** NR^{g1}R^{h1} (S5)

      wherein
   R¹¹ is each independently a hydroxyl group or a hydrolyzable group,
   R¹² is each independently a monovalent organic group,
   n1 is an integer of 1 to 3,
   R^{g1} and R^{h1} are each independently -Z⁴-SiR¹¹ₙ₁R¹²₃₋ₙ₁, and
   Z⁴ is a C₁₋₃₀ alkylene group,
   α1 is 1, and
   β1 is 1.
[17] The fluorine containing silane compound according to [1], which is C₆F₅(CH₂)₁₈Si(OCH₃)₃, or

   C₆F₅CONH(CH₂)₁₁CON(CH₂CH₂CH₂Si(OCH₃)₃)₂.
[18] A surface-treating agent comprising the fluorine containing silane compound according to any one of [1] to [17].
[19] The surface-treating agent according to [18], further comprising a condensed product of the fluorine containing silane compound according to any one of [1] to [17].
[20] The surface-treating agent according to [18] or [19], which is for vacuum deposition.
[21] The surface-treating agent according to [18] or [19], which is for wet coating.
[22] A pellet comprising the surface-treating agent according to any one of [18] to [21].
[23] An article comprising a substrate and a layer on the substrate, the layer being formed from the fluorine containing silane compound according to any one of [1] to [17].
[24] The article according to [23], comprising an intermediate layer containing silicon oxide between the substrate and the layer.
[25] The article according to [24], wherein the intermediate layer comprises alkali metal atoms.
[26] The article according to [25], wherein at least a portion of the alkali metal atoms are sodium.
[27] The article according to [25] or [26], which is an optical member.
[28] The article according to [27], which is a display.

### Advantageous Effect of Invention

According to the present disclosure, there can be provided a new fluorine containing silane compound.

### Description of Embodiments

The term "monovalent organic group" as used herein refers to a carbon containing monovalent group. The monovalent organic group is not limited, and may be a hydrocarbon group or a derivative thereof. The derivative of a hydrocarbon group refers to a group that has one or more of N, O, S, Si, amide, sulfonyl, siloxane, carbonyl, carbonyloxy, and the like at an end or in the molecular chain of the hydrocarbon group. The term simply referred to as an "organic group" means a monovalent organic group. The term "divalent organic group" refers to a carbon containing divalent group. Such a divalent organic group may be, for example, a divalent group obtained by further removing one hydrogen atom from an organic group. Similarly, an organic group having a valence of 3 or more refers to a group obtained by removing a predetermined number of hydrogen atoms from an organic group.

As used herein, the "hydrocarbon group" refers to a group containing carbon and hydrogen and a group in which a hydrogen atom is removed from the hydrocarbon. Such a hydrocarbon group is not limited, and examples thereof include C₁₋₂₀ hydrocarbon groups, such as an aliphatic hydrocarbon group and an aromatic hydrocarbon group. The "aliphatic hydrocarbon group" may be either linear, branched, or cyclic, and may be either saturated or unsaturated. The hydrocarbon group may contain one or more ring structures. The hydrocarbon group is optionally substituted with one or more substituents.

The substituent of the "hydrocarbon group" as used herein is not limited, and examples thereof include a halogen atom; and one or more groups selected from a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5- to 10-membered heterocyclyl group, a 5- to 10-membered unsaturated heterocyclyl group, a C₆₋₁₀ aryl group, and a 5- to 10-membered heteroaryl group each optionally substituted with one or more halogen atoms.

The term "hydrolyzable group" as used herein refers to a group that can undergo a hydrolysis reaction, namely, refers to a group that can be removed from the main backbone of a compound by a hydrolysis reaction. Examples of the hydrolyzable group include -OR^{h}, -OCOR^{h}, -O-N=CR^{h}₂, -NR^{h}₂, -NHR^{h}, -NCO, and a halogen (in these formulae, R^{h} represents a substituted or unsubstituted alkyl group having 1 to 4 carbon atoms), and -OR^{h} (that is, an alkoxy group) is preferred. Examples of R^{h} include an unsubstituted alkyl group such as a methyl group, an ethyl group, a propyl group, an isopropyl group, a n-butyl group, and an isobutyl group; and a substituted alkyl group such as a chloromethyl group. Among them, an alkyl group, in particular an unsubstituted alkyl group, is preferred, and a methyl group or an ethyl group is more preferred.

The present disclosure provides a fluorine containing silane compound represented by the following formula (1):

Rf_{α1}-X^{A}-R^{Si}_{β1} (1)

wherein
Rf is a monovalent aromatic group substituted with a fluorine atom or a fluorine containing substituent,
X^{A} is a single bond or a di- to decavalent group,
R^{Si} is a monovalent group containing a Si atom to which a hydroxyl group or a hydrolyzable group is bonded,
α1 is an integer of 1 to 9, and
β1 is an integer of 1 to 9.

Rf is an aromatic group substituted with a fluorine atom or a fluorine containing substituent.

The fluorine containing substituent is not limited as long as it has a fluorine atom. The fluorine containing substituent may be, for example, a fluorine containing hydrocarbon group, or a group having a fluorine containing hydrocarbon group.

The fluorine containing substituent may be preferably a fluoroalkyl group, a fluoroalkoxy group, R^{N}HN-, or R^{N}₂N- (wherein R^{N} is a fluoroalkyl group).

Rf is preferably an aromatic group substituted with a fluorine atom, a fluoroalkyl group, a fluoroalkoxy group, R^{N}HN- or R^{N}₂N- (wherein R^{N} is a fluoroalkyl group).

In one embodiment, Rf is an aromatic group substituted with a fluorine atom.

In another embodiment, Rf is an aromatic group substituted with a C₁₋₆ fluoroalkyl group, a C₁₋₆ fluoroalkoxy group, R^{N}HN- or R^{N}₂N- (wherein R^{N} is a C₁₋₆ fluoroalkyl group).

The fluoroalkyl group is preferably a C₁₋₆ fluoroalkyl group, more preferably a C₁₋₃ fluoroalkyl group, and still more preferably a fluoromethyl group. The fluoroalkyl group may be linear or may be branched. The fluoroalkyl group may be partially fluorinated, or may be perfluorinated. The fluoroalkyl group is preferably an alkyl group having CF₃ or CHF₂ at an end thereof, more preferably a CF₃-C₀₋₅ alkylene group or a CHF₂-C₀₋₅ alkylene group, still more preferably a CF₃-C₀₋₂ alkylene group or a CHF₂-C₀₋₂ alkylene group, and even more preferably a trifluoromethyl group or a difluoromethyl group. The fluoroalkyl group may be a perfluoroalkyl group.

The fluoroalkoxy group is preferably a C₁₋₆ fluoroalkoxy group, more preferably a C₁₋₃ fluoroalkoxy group, and still more preferably a fluoromethyl group. The fluoroalkoxy group may be linear or may be branched. The fluoroalkoxy group may be partially fluorinated, or may be perfluorinated. The fluoroalkoxy group is preferably an alkoxy group having CF₃ or CHF₂ at an end thereof, more preferably a CF₃-C₀₋₅ alkoxy group or a CHF₂-C₀₋₅ alkoxy group, still more preferably a CF₃-C₀₋₂ alkoxy group or a CHF₂-C₀₋₂ alkoxy group, and even more preferably a trifluoromethoxy group or a difluoromethoxy group. The fluoroalkyl group may be a perfluoroalkyl group.

R^{N} in R^{N}HN- and R^{N}₂N- is a fluoroalkyl group. Such a fluoroalkyl group is preferably a C₁₋₆ fluoroalkyl group, more preferably a C₁₋₃ fluoroalkyl group, and still more preferably a fluoromethyl group. The fluoroalkyl group may be linear or may be branched. The fluoroalkyl group may be partially fluorinated, or may be perfluorinated. The fluoroalkyl group is preferably an alkyl group having CF₃ or CHF₂ at an end thereof, more preferably a CF₃-C₀₋₅ alkylene group or a CHF₂-C₀₋₅ alkylene group, still more preferably a CF₃-C₀₋₂ alkylene group or a CHF₂-C₀₋₂ alkylene group, even more preferably CF₃, CF₃CH₂, CHF₂, CHF₂CH₂, and particularly preferably CF₃ or CHF₂. The fluoroalkyl group may be a perfluoroalkyl group.

In a preferred embodiment, Rf is an aromatic group substituted with a trifluoromethyl group, a trifluoromethoxy group, a trifluoromethylamine group, or a bis(trifluoromethyl)amine group.

The aromatic group includes not only an aromatic ring containing only carbon as ring atoms (so-called aryl), but also an aromatic ring further containing nitrogen, oxygen or sulfur (so-called heteroaryl), and a group having a plurality of aromatic rings.

The aromatic group in Rf preferably has a benzene ring, a naphthalene ring, a phenanthrene ring, an anthracene ring, a tetracene ring, a pentacene ring, a benzopyrene ring, a chrysene ring, a pyrene ring, a triphenylene ring, a corannulene ring, an ovalene ring, an indole ring, a furan ring, a thiophene ring, a pyrrole ring, a pyrazole ring, an imidazole ring, a pyridine ring, a pyridazine ring, a pyrimidine ring, a pyrazine ring, a biphenyl ring, a terphenyl ring, a triphenylmethane ring, or a benzophenone ring.

In one embodiment, the aromatic group in Rf preferably has a benzene ring, a naphthalene ring, a phenanthrene ring, an anthracene ring, a tetracene ring, a pentacene ring, a benzopyrene ring, a chrysene ring, a pyrene ring, a triphenylene ring, a corannulene ring, or an ovalene ring, more preferably a benzene ring, or a naphthalene ring, and still more preferably a benzene ring.

In one embodiment, the aromatic group in Rf preferably has an indole ring, a furan ring, a thiophene ring, a pyrrole ring, a pyrazole ring, an imidazole ring, a pyridine ring, a pyridazine ring, a pyrimidine ring, or a pyrazine ring, and more preferably an indole ring.

In one embodiment, the aromatic group in Rf preferably has a biphenyl ring, a terphenyl ring, a triphenylmethane ring, or a benzophenone ring.

In a preferred embodiment, Rf is a phenyl group substituted with a fluorine atom, a C₁₋₆ fluoroalkyl group, a C₁₋₆ fluoroalkoxy group, R^{N}HN- or R^{N}₂N- (wherein R^{N} is a fluoroalkyl group).

The number of substituents in the aromatic group in Rf is not limited, and may be, for example, 1 to 10, 1 to 5, 1 to 3, 1, 2, or 3. In one embodiment, the number of substituents in Rf is 1. In another embodiment, the number of substituents in Rf is 2 or more. In another embodiment, the aromatic group in Rf is persubstituted.

X^{A} is a single bond or a di- to decavalent group.

The di- to decavalent organic group in X^{A} is preferably a di- to octavalent organic group. In one embodiment, such a di- to decavalent organic group is preferably a di- to tetravalent organic group, and more preferably a divalent organic group. In another embodiment, such a di- to decavalent organic group is preferably a tri- to octavalent organic group, and more preferably a tri- to hexavalent organic group.

In one embodiment, X^{A} is a single bond or a divalent organic group, and α1 and β1 are 1.

In one embodiment, X^{A} is a tri- to hexavalent organic group, α1 is 1, and β1 is 2 to 5.

In one embodiment, X^{A} is a trivalent organic group, α1 is 1, and β1 is 2.

When X^{A} is a single bond or a divalent organic group, the formula (1) is represented by the following formula (1').

Rf - X^{A}- R^{Si} (1')

In one embodiment, examples of X^{A} include a single bond or a divalent organic group represented by the following formula:

- (R⁵¹)ₚ₅-(X⁵¹)_{q5}-

wherein
R⁵¹ is a single bond, -(CH₂)ₛ₅-, or an o-, m- or p-phenylene group, and is preferably -(CH₂)ₛ₅-,
s5 is an integer of 1 to 30, preferably an integer of 1 to 15, more preferably an integer of 1 to 10, and even more preferably an integer of 1 to 6, such as an integer of 1 to 3, or is an integer of 1 to 20, preferably an integer of 4 to 15, and more preferably an integer of 7 to 13, and may be, for example, an integer of 1 to 30, an integer of 11 to 30, or an integer of 11 to 22,
X⁵¹is -(X⁵²)₁₅-,
X⁵² is each independently a group selected from the group consisting of -O-, -S-, an o-, m- or p-phenylene group, -CO-, -C(O)O-, -CONR⁵⁴-, -O-CONR⁵⁴-, -NR⁵⁴-, -(CH₂)ₙ₅ -, -Si (R⁵⁹)₂- and -SiO (R⁵⁹)₂-,
R⁵⁴ is each independently a hydrogen atom or a monovalent organic group, and is preferably a hydrogen atom, a phenyl group, a C₁₋₆ alkyl group (preferably a methyl group), or an oxyalkylene containing group having 1 to 10 carbon atoms,
R⁵⁹ is an alkyl group (preferably an alkyl group having 1 to 10 carbon atoms), or a phenyl group,
n5 is each independently an integer of 1 to 20, preferably an integer of 1 to 15, more preferably an integer of 1 to 10, and even more preferably an integer of 1 to 6, such as an integer of 1 to 3,
15 is an integer of 1 to 10, preferably an integer of 1 to 5, and more preferably an integer of 1 to 3,
p5 is 0 or 1, and
q5 is 0 or 1,
where at least one of p5 and q5 is 1, and the occurrence order of the respective repeating units enclosed in parentheses provided with p5 or q5 is not limited.
Here, X^{A} (typically a hydrogen atom of X^{A}) is optionally substituted with one or more substituents selected from a fluorine atom, a C₁₋₃ alkyl group, and a C₁₋₃ fluoroalkyl group. In a preferred embodiment, X^{A} is not substituted with any of these groups.

The oxyalkylene containing group having 1 to 10 carbon atoms is a group containing a -O-C₁₋₁₀ alkylene-, and is, for example, -R⁵⁵-(-O-C₁₋₁₀ alkylene)ₙ-R⁵⁶ (wherein R⁵⁵ is a single bond or a divalent organic group, preferably a C₁₋₆ alkylene group, n is an arbitrary integer, preferably an integer of 2 to 10, and R⁵⁶ is a hydrogen atom or a monovalent organic group, preferably a C₁₋₆ alkyl group). The alkylene group may be linear or may be branched.

In one embodiment, X^{A} may be a group represented by the following formula:

-X^{B}-X^{C}-X^{D}-X^{E}-X^{F}-.

wherein
X^{B} is a single bond, a C₁₋₆ alkylene group, or a C₂₋₆ alkenylene group,
X^{C} is a single bond or a divalent group,
X^{D} is a divalent siloxane containing group, or group represented by the following formula:

   -(CFH)ₐ-(CH₂)_{b}-(O)_{c}-

   [wherein
a is an integer of 0 to 200,
b is an integer of 0 to 200,
c is an integer of 0 to 200, and
the occurrence order of the respective repeating units enclosed in parentheses provided with a, b, and c is not limited],
X^{E} is a single bond or a divalent group, and
X^{F} is a single bond, a C₁₋₆ alkylene group, or a C₂₋₆ alkenylene group.

X^{B} is a single bond, a C₁₋₆ alkylene group, or a C₂₋₆ alkenylene group.

In one embodiment, X^{B} is a single bond.

In one embodiment, X^{B} is a C₁₋₆ alkylene group.

The C₁₋₆ alkylene group may be linear or may be branched, and is preferably linear. The C₁₋₆ alkylene group may be preferably a C₁₋₃ alkylene group such as a methyl group.

In one embodiment, X^{B} is a C₂₋₆ alkenylene group.

The C₂₋₆ alkenylene group may be linear or may be branched, and is preferably linear. The C₂₋₆ alkenylene group may be preferably a C₂₋₃ alkylene group.

X^{C} is a single bond or a divalent group.

X^{C} may be preferably a single bond, an oxygen atom, a sulfur atom, an o-, m- or p-phenylene group, -CO-, - C(O)O-, -OC(O)-, -CONR⁵⁴-, -NR⁵⁴CO-, -O-CONR⁵⁴-, -NR⁵⁴COO-, -NR⁵⁴CONR⁵⁴-, -NR⁵⁴-, or - (CH₂)ₙ₅-, and more preferably a single bond, an oxygen atom, -C(O)O-, -OC(O)-, -CONR⁵⁴, or -NR⁵⁴CO-.

R⁵⁴ is each independently a hydrogen atom or a monovalent organic group, and is preferably a hydrogen atom, a phenyl group, a C₁₋₆ alkyl group (preferably a methyl group), or an oxyalkylene containing group having 1 to 10 carbon atoms.

n5 is each independently an integer of 1 to 200. n5 is, for example, an integer of 1 to 30, specifically an integer of 1 to 20, and more specifically an integer of 1 to 15, an integer of 1 to 10, or an integer of 1 to 6, such as an integer of 1 to 3. In one embodiment, n5 is an integer of 10 to 200, such as an integer of 10 to 30. In one embodiment, n5 is an integer of 1 to 9.

The oxyalkylene containing group having 1 to 10 carbon atoms is a group containing a -O-C₁₋₁₀ alkylene-, and is, for example, -R⁵⁵-(-O-C₁₋₁₀ alkylene)ₙ-R⁵⁶ (wherein R⁵⁵ is a single bond or a divalent organic group, preferably a C₁₋₆ alkylene group, n is an arbitrary integer, preferably an integer of 2 to 10, and R⁵⁶ is a hydrogen atom or a monovalent organic group, preferably a C₁₋₆ alkyl group). The alkylene group may be linear or may be branched.

X^{D} is a divalent siloxane containing group, or group represented by the following formula:

-(CFH)ₐ-(CH₂)_{b}-(O)_{c}-.

wherein
a is an integer of 0 to 200,
b is an integer of 0 to 200,
c is an integer of 0 to 200, and
the occurrence order of the respective repeating units enclosed in parentheses provided with a, b, and c is not limited.

In one embodiment, X^{D} is a divalent siloxane containing group.

The divalent siloxane containing group is preferably a group represented by the following formula: 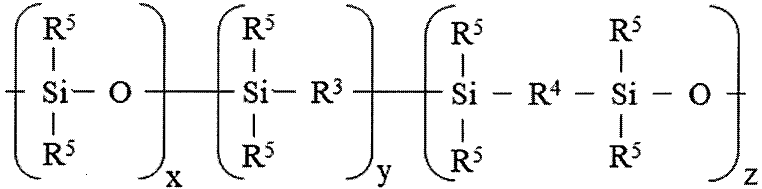 wherein
R³ is each independently a C₁₋₁₂ alkylene group, -R⁶-O-R⁶-, -R⁸-R⁷-R⁸-, -R⁸-R⁷-R⁹-R⁷-R⁸-, -R⁸-R⁷-R⁹-R⁶-R⁹-R⁷-R⁸-, or -R⁹-R⁶-R⁹-R⁷-R⁹-R⁶-R⁹-,
R⁴ is each independently a C₁₋₁₂ alkylene group, -R⁶-O-R⁶-, -R⁸-R⁷-R⁸-, -R⁸-R⁷-R⁹-R⁷-R⁸-, -R⁸-R⁷-R⁹-R⁶-R⁹-R⁷-R⁸-, or -R⁹-R⁶-R⁹-R⁷-R⁹-R⁶-R⁹-,
R⁶ is each independently a C₁₋₆ alkylene group,
R⁷ is each independently an optionally substituted phenylene group or naphthylene group,
R⁸ is each independently a single bond or a C₁₋₆ alkylene group,
R⁹ is each independently a single bond or an oxygen atom,
R⁵ is each independently a hydrocarbon group,
x is an integer of 0 to 200,
y is an integer of 0 to 200,
z is an integer of 0 to 200,
x + y + z is 1 or more, and
the occurrence order of the respective repeating units enclosed in parentheses provided with x, y, or z is not limited in the formula.

R³ is each independently a C₁₋₁₂ alkylene group, -R⁶-O-R⁶-, -R⁸-R⁷-R⁸-, -R⁸-R⁷-R⁹-R⁷-R⁸-, -R⁸-R⁷-R⁹-R⁶-R⁹-R⁷-R⁸-, or -R⁹-R⁶-R⁹-R⁷-R⁹-R⁶-R⁹-, and preferably a C₁₋₁₂ alkylene group or -R⁶-O-R⁶-.

R⁴ is each independently a C₁₋₁₂ alkylene group, -R⁶-O-R⁶-, -R⁸-R⁷-R⁸-, -R⁸-R⁷-R⁹-R⁷-R⁸-, -R⁸-R⁷-R⁹-R⁶-R⁹-R⁷-R⁸-, or -R⁹-R⁶-R⁹-R⁷-R⁹-R⁶-R⁹-.

In one embodiment, R⁴ is each independently a C₁₋₁₂ alkylene group or -R⁶-O-R⁶-.

In another embodiment, R⁴ is each independently -R⁸-R⁷-R⁸-, -R⁸-R⁷-R⁹-R⁷-R⁸-, -R⁸-R⁷-R⁹-R⁶-R⁹-R⁷-R⁸-, or -R⁹-R⁶-R⁹-R⁷-R⁹-R⁶-R⁹-.

In one embodiment, R³ is each independently a C₁₋₁₂ alkylene group or -R⁶-O-R⁶-, and R⁴ is each independently a C₁₋₁₂ alkylene group or -R⁶-O-R⁶-.

In another embodiment, R³ is each independently a C₁₋₁₂ alkylene group or -R⁶-O-R⁶-, and R⁴ is each independently -R⁸-R⁷-R⁸-, -R⁸-R⁷-R⁹-R⁷-R⁸-, -R⁸-R⁷-R⁹-R⁶-R⁹-R⁷-R⁸-, or -R⁹-R⁶-R⁹-R⁷-R⁹-R⁶-R⁹-.

The C₁₋₁₂ alkylene group may be linear or may be branched. The C₁₋₁₂ alkylene group is preferably linear.

The C₁₋₁₂ alkylene group is preferably a C₂₋₈ alkylene group, and more preferably a C₂₋₆ alkylene group.

R⁶ is each independently a C₁₋₆ alkylene group. The C₁₋₆ alkylene group may be linear or may be branched. The C₁₋₆ alkylene group is preferably linear.

The C₁₋₆ alkylene group is preferably a C₂₋₄ alkylene group, and more preferably a C₂₋₃ alkylene group.

In a preferred embodiment, in a group containing a plurality of R⁶, all R⁶ are the same group.

R⁷ is each independently an optionally substituted arylene group.

In one embodiment, R⁷ is each independently

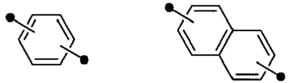

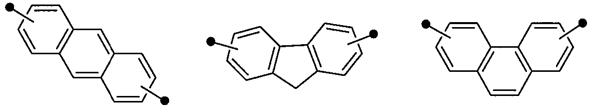

In one embodiment, R⁷ is a phenylene group.

In another embodiment, R⁷ is a naphthylene group.

The arylene group may have a substituent. The number of substituents is not limited, and it is, for example, 1 to 4, and preferably 1 or 2.

In one embodiment, the phenylene group and the naphthylene group may have a substituent. The number of substituents is not limited, and it is, for example, 1 to 4, and preferably 1 or 2. As the substituted phenylene group, 2,5-substituted phenylene is preferred.

The substituent with respect to the arylene group is each independently -R⁴¹-R⁴².

R⁴¹ is a single bond, an oxygen atom, or a sulfur atom, preferably a single bond or an oxygen atom, and more preferably an oxygen atom.

R⁴² is a C₁₋₁₂ alkyl group, -(O-R⁴³)p, -R⁴⁴-R⁴⁵, or -R⁴⁴-OR⁴⁶, all of which are optionally substituted with a halogen.

The halogen is fluorine, chlorine, bromine, or iodine, and is preferably fluorine.

The C₁₋₁₂ alkyl group in R⁴² may be linear or may be branched.

R⁴³ is a C₁₋₆ alkylene group, and preferably a C₂₋₄ alkylene group. Such an alkylene group may be linear or may be branched.

R⁴⁴ is a C₁₋₁₂ alkylene group, and preferably a C₁₋₆ alkylene group. Such an alkylene group may be linear or may be branched.

R⁴⁵ is -CH=CH₂ or -OCOCH=CH₂.

R⁴⁶ is a hydrogen atom or a C₁₋₆ alkyl group. Such an alkyl group may be linear or may be branched. The C₁₋₆ alkyl group is preferably a C₁₋₃ alkyl group, more preferably a C₁₋₂ alkyl group, and still more preferably a methyl group.

R⁸ is each independently a single bond or a C₁₋₆ alkylene group. Such a C₁₋₆ alkylene group may be linear or may be branched.

In one embodiment, R⁸ is a single bond.

In another embodiment, R⁸ is a C₁₋₆ alkylene group.

R⁹ is each independently a single bond or an oxygen atom.

In one embodiment, R⁹ is a single bond.

In another embodiment, R⁹ is an oxygen atom.

R⁵ is each independently a hydrocarbon group. Such a hydrocarbon group is optionally substituted.

R⁵ is, each independently, preferably an unsubstituted hydrocarbon group or a hydrocarbon group substituted with a halogen atom. Such a halogen atom is preferably a fluorine atom.

R⁵ is, each independently, preferably a C₁₋₁₈ alkyl group or aryl group optionally substituted with a halogen atom, and more preferably a C₁₋₁₈ alkyl group or aryl group.

The C₁₋₁₈ alkyl group may be linear or may be branched, and is preferably linear. The C₁₋₁₈ alkyl group is preferably a C₁₋₁₀ alkyl group, more preferably a C₁₋₆ alkyl group, still more preferably a C₁₋₄ alkyl group, and even more preferably a methyl group.

The aryl group is preferably a phenyl group.

In one embodiment, R⁵ is each independently a C₁₋₆ alkyl group, preferably a C₁₋₄ alkyl group, and more preferably a methyl group.

In another embodiment, R⁵ is a phenyl group.

In another embodiment, R⁵ is each independently a methyl group or a phenyl group, and preferably a methyl group.

x is an integer of 0 to 200, preferably an integer of 0 to 100, more preferably an integer of 1 to 100, still more preferably an integer of 5 to 50, and even more preferably an integer of 10 to 30.

In one embodiment, x is 0.

In one embodiment, x is 1 to 200, preferably an integer of 1 to 100, more preferably an integer of 5 to 50, and still more preferably an integer of 10 to 30.

y is an integer of 0 to 200, preferably an integer of 0 to 100, more preferably an integer of 1 to 100, still more preferably an integer of 5 to 50, and even more preferably an integer of 10 to 30.

In one embodiment, y is 0.

In one embodiment, y is 1 to 200, preferably an integer of 1 to 100, more preferably an integer of 5 to 50, and still more preferably an integer of 10 to 30.

z is an integer of 0 to 200, preferably an integer of 0 to 100, more preferably an integer of 1 to 100, still more preferably an integer of 5 to 50, and even more preferably an integer of 10 to 30.

In one embodiment, z is 0.

In one embodiment, z is 1 to 200, preferably an integer of 1 to 100, more preferably an integer of 5 to 50, and still more preferably an integer of 10 to 30.

In one embodiment, y is 0 and z is 0.

The divalent siloxane containing group may be a random polymer or may be a block polymer.

In one embodiment, X^{D} may be a group represented by the formula:

- (CFH)ₓ-(CH₂)_{y}-(O)_{z}-.

wherein
x is an integer of 0 to 200,
y is an integer of 0 to 200,
z is an integer of 0 to 200, and
the occurrence order of the respective repeating units enclosed in parentheses provided with x, y, and z is not limited.

In one embodiment, X^{D} may be -(CH₂)_{y}-. y may be preferably 1 or more, and more preferably 3 or more, for example, 8 or more, 11 or more, 16 or more, or 20 or more. y may be preferably 100 or less, more preferably 50 or less, still more preferably 36 or less, and even more preferably 30 or less, for example, 22 or less, 16 or less, 10 or less, or 6 or less. In one embodiment, X^{D} is preferably a C₁₋₃₆ alkyl group, preferably a C₁₋₃₀ alkyl group, still more preferably a C₃₋₂₂ alkyl group, and even more preferably a C₈₋₁₆ alkyl group, for example, a C₁₁₋₃₀ alkyl group, or a C₁₁₋₂₂ alkyl group.

In one embodiment, X^{D} may be -(CFH)ₓ-(CH₂)_{y}-. x may be preferably 1 or more, and more preferably 3 or more, for example, 8 or more, 11 or more, 16 or more, or 20 or more. y may be preferably 100 or less, more preferably 50 or less, and still more preferably 36 or less, for example, 22 or less, 16 or less, 10 or less, or 6 or less. y may be preferably 1 or more, and more preferably 3 or more, for example, 8 or more, 11 or more, 16 or more, or 20 or more. y may be preferably 100 or less, more preferably 50 or less, and still more preferably 36 or less, for example, 22 or less, 16 or less, 10 or less, or 6 or less.

In one embodiment, X^{D} may be -(CH₂)_{y}-(O)_{z}-. y may be preferably 1 or more, and more preferably 3 or more, for example, 8 or more, 11 or more, 16 or more, or 20 or more. y may be preferably 100 or less, more preferably 50 or less, and still more preferably 36 or less, for example, 22 or less, 16 or less, 10 or less, or 6 or less. z may be preferably 1 or more, and more preferably 3 or more, for example, 8 or more, 11 or more, 16 or more, or 20 or more. y may be preferably 50 or less, more preferably 20 or less, and still more preferably 16 or less, for example, 12 or less, 10 or less, 8 or less, or 6 or less.

In one embodiment, X^{D} may be a group represented by the formula:

-(OR⁶¹)_{f}-:

wherein
R⁶¹ is a C₁₋₆ alkylene group, and
f is an integer of 2 to 30.

The C₁₋₆ alkylene group in R⁶¹ may be linear or may be branched. In one embodiment, the C₁₋₆ alkylene group is linear. In one embodiment, the C₁₋₆ alkylene group is branched.

The C₁₋₆ alkylene group is preferably a C₁₋₃ alkylene group, and more preferably a C₂₋₃ alkylene group.

f may be an integer of 2 to 30, and preferably an integer of 6 to 30, such as an integer of 6 to 20, 10 to 30, or 10 to 20.

X^{E} is a single bond or a divalent group.

X^{E} may be preferably a single bond, an oxygen atom, a sulfur atom, an o-, m- or p-phenylene group, -CO-, - C(O)O-, -OC(O)-, -CONR⁵⁴-, -NR⁵⁴CO-, -O-CONR⁵⁴-, -NR⁵⁴COO-, -NR⁵⁴CONR⁵⁴-, -NR⁵⁴-, or -(CH₂)ₙ₅-, and more preferably a single bond, an oxygen atom, -C(O)O-, -OC(O)-, -CONR⁵⁴, or -NR⁵⁴CO-.

R⁵⁴ is each independently a hydrogen atom or a monovalent organic group, and is preferably a hydrogen atom, a phenyl group, a C₁₋₆ alkyl group (preferably a methyl group), or an oxyalkylene containing group having 1 to 10 carbon atoms.

n5 is each independently an integer of 1 to 200. n5 is, for example, an integer of 1 to 30, specifically an integer of 1 to 20, and more specifically an integer of 1 to 15, an integer of 1 to 10, or an integer of 1 to 6, such as an integer of 1 to 3. In one embodiment, n5 is an integer of 10 to 200, such as an integer of 10 to 30. In one embodiment, n5 is an integer of 1 to 9.

The oxyalkylene containing group having 1 to 10 carbon atoms is a group containing a -O-C₁₋₁₀ alkylene-, and is, for example, -R⁵⁵-(-O-C₁₋₁₀ alkylene)ₙ-R⁵⁶ (wherein R⁵⁵ is a single bond or a divalent organic group, preferably a C₁₋₆ alkylene group, n is an arbitrary integer, preferably an integer of 2 to 10, and R⁵⁶ is a hydrogen atom or a monovalent organic group, preferably a C₁₋₆ alkyl group). The alkylene group may be linear or may be branched.

X^{F} is a single bond, a C₁₋₆ alkylene group, or a C₂₋₆ alkenylene group.

In one embodiment, X^{F} is a single bond.

In one embodiment, X^{F} is a C₁₋₆ alkylene group.

The C₁₋₆ alkylene group may be linear or may be branched, and is preferably linear. The C₁₋₆ alkylene group may be preferably a C₁₋₃ alkylene group such as a methyl group.

In one embodiment, X^{F} is a C₂₋₆ alkenylene group.

The C₂₋₆ alkenylene group may be linear or may be branched, and is preferably linear. The C₂₋₆ alkenylene group may be preferably a C₂₋₃ alkylene group.

In one embodiment, X^{A} is a C₁₁₋₃₀ alkylene group, or a group represented by the following formula:

-X^{C}-X^{D}-X^{E}-

wherein
X^{C} is -CONH-,
X^{D} is a C₈₋₃₀ alkylene group, and
X^{E} is -CO-.

The X^{A} is bonded to Rf on its left side, and bonded to R^{Si} on its right side.

In one preferred embodiment, X^{A} is a trivalent organic group. X^{A} is a trivalent organic group, α1 is 2, and β1 is 1, or α1 is 1, and β1 is 2.

In one embodiment, X^{A} may be each independently a group represented by the following formula: 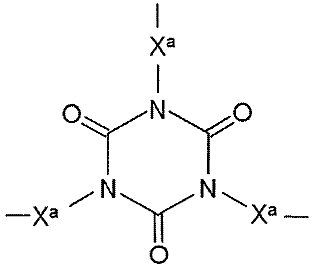 wherein X^{a} is a single bond or a divalent organic group.

Preferred examples of the divalent organic group include a group represented by the following formula: 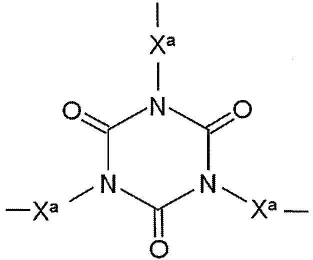 wherein X^{a} is a single bond or a divalent organic group.

X^{a} is a single bond or divalent linking group directly bonded to the isocyanuric ring. X^{a} is preferably a single bond, an alkylene group, or a divalent group containing at least one bond selected from the group consisting of an ether bond, an ester bond, an amide bond, and a sulfide bond, and more preferably a single bond, an alkylene group having 1 to 10 carbon atoms, or a divalent hydrocarbon group having 1 to 10 carbon atoms and containing at least one bond selected from the group consisting of an ether bond, an ester bond, an amide bond, and a sulfide bond.

X^{a} is still more preferably a group represented by the following formula:

- (CX¹²¹X¹²²)ₓ₁-(X^{a1})_{y1}-(CX¹²³X¹²⁴)_{z1}-

wherein X¹²¹ to X¹²⁴ are each independently H, F, OH, or - OSi(OR¹²¹)₃ (wherein three R¹²¹ are each independently an alkyl group having 1 to 4 carbon atoms),
X^{a1} is -C(=O)NH-, -NHC(=O)-, -O-, -C(=O)O-, -OC(=O)-, -OC(=O)O-, or -NHC(=O)NH- (each group is bonded to CX¹²¹X¹²² on its left side), and
x1 is an integer of 0 to 10, y1 is 0 or 1, and z1 is an integer of 1 to 10.

x^{a1} is preferably -O- or -C(=O)O-.

X^{a} is particularly preferably
a group represented by the following formula:

   -(CH₂)ₘ₁₂-O-(CH₂)ₘ₁₃-
wherein m12 is an integer of 1 to 3, and m13 is an integer of 1 to 3,
a group represented by the following formula:

   -(CH₂)ₘ₁₅-O-CH₂CH(OH)-(CH₂)ₘ₁₆-
wherein m15 is an integer of 1 to 3, and m16 is an integer of 1 to 3,
a group represented by the following formula:

   - (CH₂)ₘ₁₈-
wherein m18 is an integer of 1 to 3, or
a group represented by the following formula:

   - (CH₂)ₘ₂₀-O-CH₂CH(OSi(OCH₃)₃)- (CH₂)ₘ₂₁-
wherein m20 is an integer of 1 to 3, and m21 is an integer of 1 to 3.

X^{a} is not limited, and specific examples thereof include
-CH₂-, -C₂H₄-, -C₃H₆-, -C₄H₈-, -C₄H₃-O-CH₂-, -CO-O-CH₂-CH(OH)-CH₂-, -S-, -NR¹²¹-, -(CH₂)ₘ₂₂-C(=O)-O-(CH₂)ₘ₂₃-,-(CH₂)ₘ₂₂-O-C(=O)- (CH₂)ₘ₂₃-, - (CH₂)ₘ₂₂-C(=O)-NR¹²¹-(CH₂)ₘ₂₃-, and -(CH₂)ₘ₂₂-NR¹²¹-C(=O) - (CH₂)ₘ₂₃-CH₂OCH₂CH(OSi (OCH₃)₃)CH₂- wherein R¹²¹ is a C₁₋₆ hydrocarbon chain, m22 is an integer of 1 to 10, and m23 is an integer of 1 to 10.

R^{Si} is a monovalent group containing a Si atom to which a hydroxyl group or a hydrolyzable group is bonded.

In a preferred embodiment, R^{Si} is a group represented by the following formula (S1), (S2), (S3), (S4), or (S5):

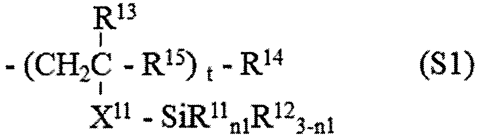

- SiR¹¹ₙ₁R¹²₃₋ₙ₁ (S2)

- SiR^{a1}ₖ₁R^{b1}ₗ₁R^{c1}ₘ₁ (S3)

- CR^{d1}ₖ₂R^{e1}ₗ₂^{Rf1}ₘ₂ (S4)

- NR^{g1}R^{h1} (S5)

wherein
R¹¹ is each independently a hydroxyl group or a hydrolyzable group,
R¹² is each independently a monovalent organic group,
n1 is each independently an integer of 0 to 3 for each (SiR¹¹ₙ₁R¹²₃₋ₙ₁) unit,
X¹¹ is each independently a single bond or a divalent organic group,
R¹³ is each independently a hydrogen atom or a monovalent organic group,
t is each independently an integer of 2 or more,
R¹⁴ is each independently a hydrogen atom, a halogen atom, or -X¹¹-SiR¹¹ₙ₁R¹²₃₋ₙ₁,
R¹⁵ is each independently a single bond, an oxygen atom, an alkylene group having 1 to 6 carbon atoms, or an alkyleneoxy group having 1 to 6 carbon atoms,
R^{a1} is each independently -Z¹-SiR²¹ₚ₁R²²_{q1}R²³ᵣ₁,
Z¹ is each independently a divalent organic group,
R²¹ is each independently -Z^{1'}-SiR^{21'}_{p1'}R^{22'}_{q1'}R^{23'}_{r1'},
R²² is each independently a hydroxyl group or a hydrolyzable group,
R²³ is each independently a monovalent organic group,
p1 is each independently an integer of 0 to 3,
q1 is each independently an integer of 0 to 3,
r1 is each independently an integer of 0 to 3,
Z^{1'} is each independently a divalent organic group,
R^{21'} is each independently -Z^{1"}-SiR^{22"}_{q1"}R^{23"}_{r1"},
R^{22'} is each independently a hydroxyl group or a hydrolyzable group,
R^{23'} is each independently a monovalent organic group,
p1' is each independently an integer of 0 to 3,
q1' is each independently an integer of 0 to 3,
r1' is each independently an integer of 0 to 3,
Z^{1"} is each independently a divalent organic group,
R^{22"} is each independently a hydroxyl group or a hydrolyzable group,
R^{23"} is each independently a monovalent organic group,
q1" is each independently an integer of 0 to 3,
r1" is each independently an integer of 0 to 3,
R^{b1} is each independently a hydroxyl group or a hydrolyzable group,
R^{c1} is each independently a monovalent organic group,
k1 is each independently an integer of 0 to 3,
11 is each independently an integer of 0 to 3,
m1 is each independently an integer of 0 to 3,
provided that, in the formula (S3), at least two Si atoms to which a hydroxyl group or a hydrolyzable group is bonded are present,
R^{d1} is each independently -Z²-CR³¹ₚ₂R³²_{q2}R³³ᵣ₂,
Z² is each independently a single bond, an oxygen atom, or a divalent organic group,
R³¹ is each independently -Z^{2'}-CR^{32'}_{q2'}R^{33'}_{r2'},
R³² is each independently -Z³-SiR³⁴ₙ₂R³⁵₃₋ₙ₂,
R³³ is each independently a hydrogen atom, a hydroxyl group, or a monovalent organic group,
p2 is each independently an integer of 0 to 3,
q2 is each independently an integer of 0 to 3,
r2 is each independently an integer of 0 to 3,
Z^{2'} is each independently a single bond, an oxygen atom, or a divalent organic group,
R^{32'} is each independently -Z³-SiR³⁴ₙ₂R³⁵₃₋ₙ₂,
R^{33'} is each independently a hydrogen atom, a hydroxyl group, or a monovalent organic group,
q2' is each independently an integer of 0 to 3,
r2' is each independently an integer of 0 to 3,
Z³ is each independently a single bond, an oxygen atom, or a divalent organic group,
R³⁴ is each independently a hydroxyl group or a hydrolyzable group,
R³⁵ is each independently a monovalent organic group,
n2 is each independently an integer of 0 to 3,
R^{e1} is each independently -Z³-SiR³⁴ₙ₂R³⁵₃₋ₙ₂,
R^{f1} is each independently a hydrogen atom, a hydroxyl group, or a monovalent organic group,
k2 is each independently an integer of 0 to 3,
12 is each independently an integer of 0 to 3,
m2 is each independently an integer of 0 to 3,
provided that, in the formula (S4), at least two Si atoms to which a hydroxyl group or a hydrolyzable group is bonded are present,
R^{g1} and R^{h1} are each independently -Z⁴-SiR¹¹ₙ₁R¹²₃₋ₙ₁, - Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂, and
Z⁴ is each independently a single bond, an oxygen atom, or a divalent organic group,
provided that, in the formula (S5), at least two Si atoms to which a hydroxyl group or a hydrolyzable group is bonded are present.

In the formulae, R¹¹ is each independently a hydroxyl group or a hydrolyzable group.

R¹¹ is preferably, each independently, a hydrolyzable group.

R¹¹ is preferably, each independently, -OR^{h}, -OCOR^{h}, -O-N=CR^{h}₂, -NR^{h}₂, -NHR^{h}, -NCO, or a halogen (in these formulae, R^{h} represents a substituted or unsubstituted C₁₋₄ alkyl group), and more preferably -OR^{h} (that is, an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among them, an alkyl group, in particular an unsubstituted alkyl group, is preferred, and a methyl group or an ethyl group is more preferred. In one embodiment, R^{h} is a methyl group, and in another embodiment, R^{h} is an ethyl group.

In the formulae, R¹² is each independently a monovalent organic group. Such a monovalent organic group is a monovalent organic group excluding the hydrolyzable group.

In R¹², the monovalent organic group is preferably a C₁₋₂₀ alkyl group, more preferably a C₁₋₆ alkyl group, and even more preferably a methyl group.

In the formulae, n1 is each independently an integer of 0 to 3 for each (SiR¹¹ₙ₁R¹²₃₋ₙ₁) unit. However, in the formula (S1), at least two (SiR¹¹ₙ₁R¹²₃₋ₙ₁) units with n1 of 1 to 3 are present. In other words, in the formula (S1), at least two Si atoms to which a hydroxyl group or a hydrolyzable group is bonded are present.

n1 is each independently an integer of preferably 1 to 3, more preferably 2 to 3, and still more preferably 3 for each (SiR¹¹ₙ₁R¹²₃₋ₙ₁) unit .

In the formulae, X¹¹ is each independently a single bond or a divalent organic group. Such a divalent organic group is preferably -R²⁸-Oₓ-R²⁹- (wherein R²⁸ and R²⁹ are each independently a single bond or a C₁₋₃₀ alkylene group, and x is 0 or 1). Such a C₁₋₃₀ alkylene group may be linear or may be branched, and is preferably linear. Such a C₁₋₃₀ alkylene group is preferably a C₁₋₁₀ alkylene group, more preferably a C₁₋₆ alkylene group, and still more preferably a C₁₋₃ alkylene group.

In one embodiment, X¹¹ is each independently a -C₁₋₆ alkylene-O-C₁₋₆ alkylene- or a -O-C₁₋₆ alkylene-.

In a preferred embodiment, X¹¹ is each independently a single bond or a linear C₁₋₆ alkylene group, preferably a single bond or a linear C₁₋₃ alkylene group, more preferably a single bond or a linear C₁₋₂ alkylene group, and still more preferably a linear C₁₋₂ alkylene group.

In the formula, R¹³ is each independently a hydrogen atom or a monovalent organic group. Such a monovalent organic group is preferably a C₁₋₂₀ alkyl group.

In a preferred embodiment, R¹³ is each independently a hydrogen atom or a linear C₁₋₆ alkyl group, preferably a hydrogen atom or a linear C₁₋₃ alkyl group, and preferably a hydrogen atom or a methyl group.

In the formula, R¹⁵ is each independently a single bond, an oxygen atom, an alkylene group having 1 to 6 carbon atoms, or an alkyleneoxy group having 1 to 6 carbon atoms.

In one embodiment, R¹⁵ is each independently an oxygen atom, an alkylene group having 1 to 6 carbon atoms, or an alkyleneoxy group having 1 to 6 carbon atoms.

In a preferred embodiment, R¹⁵ is a single bond.

In the formula, t is each independently an integer of 2 or more.

In a preferred embodiment, t is each independently an integer of 2 to 10, and preferably an integer of 2 to 6.

In the formula, R¹⁴ is each independently a hydrogen atom, a halogen atom, or -X¹¹-SiR¹¹ₙ₁R¹²₃₋ₙ₁. Such a halogen atom is preferably an iodine atom, a chlorine atom, or a fluorine atom, and more preferably a fluorine atom. In a preferred embodiment, R¹⁴ is a hydrogen atom.

In one embodiment, the formula (S1) is the following formula (S1-a): 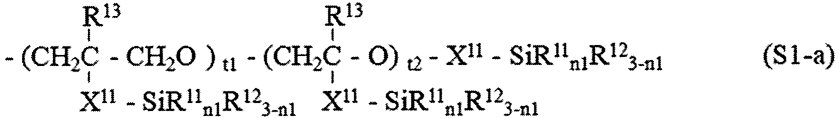 wherein
R¹¹, R¹², R¹³, X¹¹, and n1 have the same definition as described for the formula (S1),
t1 and t2 are each independently an integer of 1 or more, preferably an integer of 1 to 10, and more preferably an integer of 2 to 10, such as an integer of 1 to 5 or an integer of 2 to 5, and
the occurrence order of the respective repeating units enclosed in parentheses provided with t1 and t2 is not limited in the formula.

In a preferred embodiment, the formula (S1) is the following formula (S1-b): 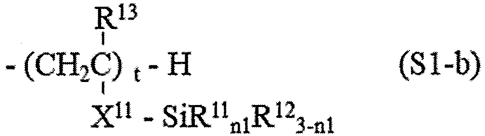 wherein R¹¹, R¹², R¹³, X¹¹, n1, and t have the same definition as described for the above formula (S1).

R^{a1} is each independently -Z¹-SiR²¹ₚ₁R²²_{q1}R²³ᵣ₁.

Z¹ is each independently an oxygen atom or a divalent organic group. Note that the structure denoted as Z¹ hereinafter is bonded to (SiR²¹ₚ₁R²²_{q1}R²³ᵣ₁) on its right side.

In a preferred embodiment, Z¹ is a divalent organic group.

In a preferred embodiment, Z¹ does not include a group that forms a siloxane bond with the Si atom to which Z¹ is bonded. Preferably, in the formula (S3), (Si-Z^{1"}-Si) does not contain a siloxane bond.

Z¹ is preferably a C₁₋₆ alkylene group, -(CH₂)_{z1}-O-(CH₂)_{z2}- (wherein z1 is an integer of 0 to 30, such as an integer of 1 to 30, an integer of 0 to 6 or an integer of 1 to 6, and z2 is an integer of 0 to 30, such as an integer of 1 to 30, an integer of 0 to 6 or an integer of 1 to 6), or -(CH₂)_{z3}-phenylene-(CH₂)_{z4}- (wherein z3 is an integer of 0 to 30, such as an integer of 1 to 30, an integer of 0 to 6 or an integer of 1 to 6, and z4 is an integer of 0 to 30, such as an integer of 1 to 30, an integer of 0 to 6 or an integer of 1 to 6). Such a C₁₋₆ alkylene group may be linear or may be branched, and is preferably linear. These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferred embodiment, Z¹ is a C₁₋₆ alkylene group or -(CH₂)_{z3}-phenylene-(CH₂)_{z4}-, preferably - phenylene-(CH₂)_{z4}-.

In another preferred embodiment, Z¹ is a C₁₋₃ alkylene group. In one embodiment, Z¹ may be -CH₂CH₂CH₂-. In another embodiment, Z¹ may be -CH₂CH₂-. In another embodiment, Z¹ may be -CH₂CH₂CH₂CH₂CH₂CH₂CH₂CH₂CH₂CH₂CH₂-.

R²¹ is each independently -Z^{1'}-SiR^{21'}_{p1'}R^{22'}_{q1'}R^{23'}_{r1'}.

Z^{1'} is each independently an oxygen atom or a divalent organic group. Note that the structure denoted as Z^{1'} hereinafter is bonded to (SiR^{21'}_{p1'}R^{22'}_{q1'}R^{23'}_{r1'}) on its right side.

In a preferred embodiment, Z^{1'} is a divalent organic group.

In a preferred embodiment, Z^{1'} does not include a group that forms a siloxane bond with the Si atom to which Z^{1'} is bonded. Preferably, in the formula (S3), (Si-Z^{1'}-Si) does not contain a siloxane bond.

Z^{1'} is preferably a C₁₋₆ alkylene group, -(CH₂)_{z1'}-O-(CH₂)_{z2'}- (wherein z1' is an integer of 0 to 30, such as an integer of 1 to 30, an integer of 0 to 6 or an integer of 1 to 6, and z2' is an integer of 0 to 30, such as an integer of 1 to 30, an integer of 0 to 6 or an integer of 1 to 6), or -(CH₂)_{z3'}-phenylene-(CH₂)_{z4'}- (wherein z3' is an integer of 0 to 30, such as an integer of 1 to 30, an integer of 0 to 6 or an integer of 1 to 6, and z4' is an integer of 0 to 30, such as an integer of 1 to 30, an integer of 0 to 6 or an integer of 1 to 6). Such a C₁₋₆ alkylene group may be linear or may be branched, and is preferably linear. These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferred embodiment, Z^{1'} is a C₁₋₆ alkylene group or -(CH₂)_{z3'}-phenylene-(CH₂)_{z4'}-, preferably - phenylene-(CH₂)_{z4'}-.

In another preferred embodiment, Z^{1'} is a C₁₋₃ alkylene group. In one embodiment, Z^{1'} may be -CH₂CH₂CH₂-. In another embodiment, Z^{1'} may be -CH₂CH₂-. In another embodiment, Z^{1'} may be -CH₂CH₂CH₂CH₂CH₂CH₂CH₂CH₂CH₂CH₂CH₂-.

R^{21'} is each independently -Z^{1"}-SiR^{22"}_{q1"}R^{23"}_{r1"}.

Z^{1"} is each independently an oxygen atom or a divalent organic group. Note that the structure denoted as Z^{1"} hereinafter is bonded to (SiR^{22"}_{q1"}R^{23"}_{r1"}) on its right side.

In a preferred embodiment, Z^{1"} is a divalent organic group.

In a preferred embodiment, Z^{1"} does not include a group that forms a siloxane bond with the Si atom to which Z^{1"} is bonded. Preferably, in the formula (S3), (Si-Z^{1"}-Si) does not contain a siloxane bond.

Z^{1"} is preferably a C₁₋₆ alkylene group, -(CH₂)_{z1"}-O-(CH₂)_{z2"}- (wherein z1" is an integer of 0 to 30, such as an integer of 1 to 30, an integer of 0 to 6 or an integer of 1 to 6, and z2" is an integer of 0 to 30, such as an integer of 1 to 30, an integer of 0 to 6 or an integer of 1 to 6), or -(CH₂)_{z3"}-phenylene-(CH₂)_{z4"}- (wherein z3" is an integer of 0 to 30, such as an integer of 1 to 30, an integer of 0 to 6 or an integer of 1 to 6, and z4" is an integer of 0 to 30, such as an integer of 1 to 30, an integer of 0 to 6 or an integer of 1 to 6). Such a C₁₋₆ alkylene group may be linear or may be branched, and is preferably linear. These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferred embodiment, Z^{1"} is a C₁₋₆ alkylene group or -(CH₂)_{z3"}-phenylene-(CH₂)_{z4"}-, preferably - phenylene-(CH₂)_{z4"}-. When Z^{1"} is such a group, light resistance, in particular ultraviolet resistance, can be further enhanced.

In another preferred embodiment, Z^{1"} is a C₁₋₃ alkylene group. In one embodiment, Z^{1"} may be - CH₂CH₂CH₂-. In another embodiment, Z^{1"} may be -CH₂CH₂-. In another embodiment, Z^{1"} may be - CH₂CH₂CH₂CH₂CH₂CH₂CH₂CH₂CH₂CH₂CH₂-.

R^{22"} is each independently a hydroxyl group or a hydrolyzable group.

R^{22"} is preferably, each independently, a hydrolyzable group.

R^{22"} is preferably, each independently, -OR^{h}, -OCOR^{h}, -O-N=CR^{h}₂, -NR^{h}₂, -NHR^{h}, or -NCO (in these formulae, R^{h} represents a substituted or unsubstituted C₁₋₄ alkyl group), and more preferably -OR^{h} (that is, an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among them, an alkyl group, in particular an unsubstituted alkyl group, is preferred, and a methyl group or an ethyl group is more preferred. In one embodiment, R^{h} is a methyl group, and in another embodiment, R^{h} is an ethyl group.

R^{23"} is each independently a monovalent organic group. Such a monovalent organic group is a monovalent organic group excluding the above hydrolyzable group.

In R^{23"}, the monovalent organic group is preferably a C₁₋₂₀ alkyl group, more preferably a C₁₋₆ alkyl group, and still more preferably a methyl group.

q1" is each independently an integer of 0 to 3, and r1" is each independently an integer of 0 to 3. The sum of q1" and r1" is 3 in the (SiR^{22"}_{q1"}R^{23"}_{r1"}) unit.

q1" is each independently an integer of preferably 1 to 3, more preferably 2 to 3, and still more preferably 3 for each (SiR^{22"}_{q1"}R^{23"}_{r1"}) unit .

R^{22'} is each independently a hydroxyl group or a hydrolyzable group.

R^{22'} is preferably, each independently, a hydrolyzable group.

R^{22'} is preferably, each independently, -OR^{h}, -OCOR^{h}, -O-N=CR^{h}₂, -NR^{h}₂, -NHR^{h}, or -NCO (in these formulae, R^{h} represents a substituted or unsubstituted C₁₋₄ alkyl group), and more preferably -OR^{h} (that is, an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among them, an alkyl group, in particular an unsubstituted alkyl group, is preferred, and a methyl group or an ethyl group is more preferred. In one embodiment, R^{h} is a methyl group, and in another embodiment, R^{h} is an ethyl group.

R^{23'} is each independently a monovalent organic group. Such a monovalent organic group is a monovalent organic group excluding the above hydrolyzable group.

In R^{23'}, the monovalent organic group is preferably a C₁₋₂₀ alkyl group, more preferably a C₁₋₆ alkyl group, and even more preferably a methyl group.

p1' is each independently an integer of 0 to 3, q1' is each independently an integer of 0 to 3, and r1' is each independently an integer of 0 to 3. The sum of p', q1', and r1' is 3 in the (SiR^{21'}_{p1'}R^{22'}_{q1'}R^{23'}_{r1'}) unit.

In one embodiment, p1' is 0.

In one embodiment, p1' may be each independently an integer of 1 to 3, an integer of 2 to 3, or 3 for each (SiR^{21'}_{p1'}R^{22'}_{q1'}R^{23'}_{r1'}) unit. In a preferred embodiment, p1' is 3.

In one embodiment, q1' is each independently an integer of 1 to 3, preferably an integer of 2 to 3, and more preferably 3 for each (SiR^{21'}_{p1'}R^{22'}_{q1'}R^{23'}_{r1'}) unit.

In one embodiment, p1' is 0, and q1' is each independently an integer of 1 to 3, preferably an integer of 2 to 3, and even more preferably 3 for each (SiR^{21'}_{p1'}R^{22'}_{q1'}R^{23'}_{r1'}) unit.

R²² is each independently a hydroxyl group or a hydrolyzable group.

R²² is preferably, each independently, a hydrolyzable group.

R²² is preferably, each independently, -OR^{h}, -OCOR^{h}, -O-N=CR^{h}₂, -NR^{h}₂, -NHR^{h}, or -NCO (in these formulae, R^{h} represents a substituted or unsubstituted C₁₋₄ alkyl group), and more preferably -OR^{h} (that is, an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among them, an alkyl group, in particular an unsubstituted alkyl group, is preferred, and a methyl group or an ethyl group is more preferred. In one embodiment, R^{h} is a methyl group, and in another embodiment, R^{h} is an ethyl group.

R²³ is each independently a monovalent organic group. Such a monovalent organic group is a monovalent organic group excluding the hydrolyzable group.

In R²³, the monovalent organic group is preferably a C₁₋₂₀ alkyl group, more preferably a C₁₋₆ alkyl group, and still more preferably a methyl group.

p1 is each independently an integer of 0 to 3, q1 is each independently an integer of 0 to 3, and r1 is each independently an integer of 0 to 3. The sum of p1, q1, and r1 is 3 in the (SiR²¹ₚ₁R²²_{q1}R²³ᵣ₁) unit.

In one embodiment, p1 is 0.

In one embodiment, p1 may be each independently an integer of 1 to 3, an integer of 2 to 3, or 3 for each (SiR²¹ₚ₁R²²_{q1}R²³ᵣ₁) unit. In a preferred embodiment, p1 is 3.

In one embodiment, q1 is each independently an integer of 1 to 3, preferably an integer of 2 to 3, and more preferably 3 for each (SiR²¹ₚ₁R²²_{q1}R²³ᵣ₁) unit.

In one embodiment, p1 is 0, and q1 is each independently an integer of 1 to 3, preferably an integer of 2 to 3, and still more preferably 3 for each (SiR²¹ₚ₁R²²_{q1}R²³ᵣ₁) unit.

In the formula, R^{b1} is each independently a hydroxyl group or a hydrolyzable group.

R^{b1} is preferably, each independently, a hydrolyzable group.

R^{b1} is preferably, each independently, -OR^{h}, -OCOR^{h}, -O-N=CR^{h}₂, -NR^{h}₂, -NHR^{h}, or -NCO (in these formulae, R^{h} represents a substituted or unsubstituted C₁₋₄ alkyl group), and more preferably -OR^{h} (that is, an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among them, an alkyl group, in particular an unsubstituted alkyl group, is preferred, and a methyl group or an ethyl group is more preferred. In one embodiment, R^{h} is a methyl group, and in another embodiment, R^{h} is an ethyl group.

In the formula, R^{c1} is each independently a monovalent organic group. Such a monovalent organic group is a monovalent organic group excluding the above hydrolyzable group.

In R^{c1}, the monovalent organic group is preferably a C₁₋₂₀ alkyl group, more preferably a C₁₋₆ alkyl group, and still more preferably a methyl group.

k1 is each independently an integer 0 to 3, l1 is each independently an integer of 0 to 3, and m1 is each independently an integer of 0 to 3. Note that the sum of k1, 11, and m1 is 3 in the (SiR^{a1}ₖ₁R^{b1}ₗ₁R^{c1}ₘ₁) unit.

In one embodiment, k1 is each independently an integer of 1 to 3, preferably 2 or 3, and more preferably 3 for each (SiR^{a1}ₖ₁R^{b1}ₗ₁R^{c1}ₘ₁) unit. In a preferred embodiment, k1 is 3.

In the formula (S3), at least two Si atoms to which a hydroxyl group or a hydrolyzable group is bonded are present.

In a preferred embodiment, in the end moiety of the formula (S3), at least two Si atoms to which a hydroxyl group or a hydrolyzable group is bonded are present.

In a preferred embodiment, the group represented by the formula (S3) has any one of -Z¹-SiR²²_{q1}R²³ᵣ₁ (wherein q1 is an integer of 1 to 3, preferably 2 or 3, and more preferably 3, and r1 is an integer of 0 to 2), -Z^{1'}-SiR^{22'}_{q1'}R^{23'}_{r1'} (wherein q1' is an integer of 1 to 3, preferably 2 or 3, and more preferably 3, and r1' is an integer of 0 to 2), and -Z^{1"}-SiR^{22"}_{q1"}R^{23"}_{r1"} (wherein q1" is an integer of 1 to 3, preferably 2 or 3, and more preferably 3, and r1" is an integer of 0 to 2). Z¹, Z^{1'}, Z^{1"}, R²², R²³, R^{22'}, R^{23'}, R^{22"}, and R^{23"} are the same as defined above.

In a preferred embodiment, when R^{21'} is present in the formula (S3), q1" is an integer of 1 to 3, preferably 2 or 3, and more preferably 3 in at least one, preferably all of R^{21'} groups.

In a preferred embodiment, when R²¹ is present in the formula (S3), p1' is 0, and q1' is an integer of 1 to 3, preferably 2 or 3, and more preferably 3 in at least one, preferably all of R²¹ groups.

In a preferred embodiment, when R^{a1} is present in the formula (S3), p1 is 0, and q1 is an integer of 1 to 3, preferably 2 or 3, and more preferably 3 in at least one, preferably all of R^{a1} groups.

In a preferred embodiment, in the formula (S3), k1 is 2 or 3, preferably 3, p1 is 0, and q1 is 2 or 3, preferably 3.

R^{d1} is each independently -Z²-CR³¹ₚ₂R³²_{q2}R³³ᵣ₂.

Z² is each independently a single bond, an oxygen atom, or a divalent organic group. Note that the structure denoted as Z² hereinafter is bonded to (CR³¹ₚ₂R³²_{q2}R³³ᵣ₂) on its right side.

In a preferred embodiment, Z² is a divalent organic group.

In a preferred embodiment, Z² does not contain a siloxane bond.

Z² is preferably a C₁₋₆ alkylene group, -(CH₂)_{z5}-O-(CH₂)_{z6}- (wherein z5 is an integer of 0 to 30, such as an integer of 1 to 30, an integer of 0 to 6 or an integer of 1 to 6, and z6 is an integer of 0 to 30, such as an integer of 1 to 30, an integer of 0 to 6 or an integer of 1 to 6), or -(CH₂)_{z7}-phenylene-(CH₂)_{z8}- (wherein z7 is an integer of 0 to 30, such as an integer of 1 to 30, an integer of 0 to 6 or an integer of 1 to 6, and z8 is an integer of 0 to 30, such as an integer of 1 to 30, an integer of 0 to 6 or an integer of 1 to 6). Such a C₁₋₆ alkylene group may be linear or may be branched, and is preferably linear. These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferred embodiment, Z² is a C₁₋₆ alkylene group or -(CH₂)_{z7}-phenylene-(CH₂)_{z8}-, preferably - phenylene-(CH₂)_{z8}-. When Z² is such a group, light resistance, in particular ultraviolet resistance, can be further enhanced.

In another preferred embodiment, Z² is a C₁₋₃ alkylene group. In one embodiment, Z² may be -CH₂CH₂CH₂-. In another embodiment, Z² may be -CH₂CH₂-. In another embodiment, Z² may be -CH₂CH₂CH₂CH₂CH₂CH₂CH₂CH₂CH₂CH₂CH₂-.

R³¹ is each independently -Z^{2'}-CR^{32'}_{q2'}R^{33'}_{r2'}.

Z^{2'} is each independently a single bond, an oxygen atom, or a divalent organic group. Note that the structure denoted as Z^{2'} hereinafter is bonded to (CR^{32'}_{q2'}R^{33'}_{r2'}) on its right side.

In a preferred embodiment, Z^{2'} does not contain a siloxane bond.

Z^{2'} is preferably a C₁₋₆ alkylene group, - (CH₂)_{z5'}-O-(CH₂)_{z6'}- (wherein z5' is an integer of 0 to 30, such as an integer of 1 to 30, an integer of 0 to 6 or an integer of 1 to 6, and z6' is an integer of 0 to 30, such as an integer of 1 to 30, an integer of 0 to 6 or an integer of 1 to 6), or - (CH₂)_{z7},-phenylene-(CH₂)_{z8'}- (wherein z7' is an integer of 0 to 30, such as an integer of 1 to 30, an integer of 0 to 6 or an integer of 1 to 6, and z8' is an integer of 0 to 30, such as an integer of 1 to 30, an integer of 0 to 6 or an integer of 1 to 6). Such a C₁₋₆ alkylene group may be linear or may be branched, and is preferably linear. These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferred embodiment, Z^{2'} is a C₁₋₆ alkylene group or -(CH₂)_{z7'}-phenylene-(CH₂)_{z8'}-, preferably - phenylene- (CH₂)_{z8'}-. When Z^{2'} is such a group, light resistance, in particular ultraviolet resistance, can be further enhanced.

In another preferred embodiment, Z^{2'} is a C₁₋₃ alkylene group. In one embodiment, Z^{2'} may be -CH₂CH₂CH₂-. In another embodiment, Z^{2'} may be -CH₂CH₂-. In another embodiment, Z^{2'} may be -CH₂CH₂CH₂CH₂CH₂CH₂CH₂CH₂CH₂CH₂CH₂-.

R^{32'} is each independently -Z³-SiR³⁴ₙ₂R³⁵₃₋ₙ₂.

Z³ is each independently a single bond, an oxygen atom, or a divalent organic group. Note that the structure denoted as Z³ hereinafter is bonded to (SiR³⁴ₙ₂R³⁵₃₋ₙ₂) on its right side.

In one embodiment, Z³ is an oxygen atom.

In one embodiment, Z³ is a divalent organic group.

In a preferred embodiment, Z³ does not contain a siloxane bond.

Z³ is preferably a C₁₋₆ alkylene group, -(CH₂)_{z5"}-O-(CH₂)_{z6"}- (wherein z5" is an integer of 0 to 30, such as an integer of 1 to 30, an integer of 0 to 6 or an integer of 1 to 6, and z6" is an integer of 0 to 30, such as an integer of 1 to 30, an integer of 0 to 6 or an integer of 1 to 6), or -(CH₂)_{z7"}-phenylene-(CH₂)_{z8"}- (wherein z7" is an integer of 0 to 30, such as an integer of 1 to 30, an integer of 0 to 6 or an integer of 1 to 6, and z8" is an integer of 0 to 30, such as an integer of 1 to 30, an integer of 0 to 6 or an integer of 1 to 6). Such a C₁₋₆ alkylene group may be linear or may be branched, and is preferably linear. These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferred embodiment, Z³ is a C₁₋₆ alkylene group or -(CH₂)_{z7"}-phenylene-(CH₂)_{z8"}-, preferably - phenylene- (CH₂)_{z8"}-. When Z³ is such a group, light resistance, in particular ultraviolet resistance, can be further enhanced.

In another preferred embodiment, Z³ is a C₁₋₃ alkylene group. In one embodiment, Z³ may be -CH₂CH₂CH₂-. In another embodiment, Z³ may be -CH₂CH₂-. In another embodiment, Z³ may be -CH₂CH₂CH₂CH₂CH₂CH₂CH₂CH₂CH₂CH₂CH₂-.

R³⁴ is each independently a hydroxyl group or a hydrolyzable group.

R³⁴ is preferably, each independently, a hydrolyzable group.

R³⁴ is preferably, each independently, -OR^{h}, -OCOR^{h}, -O-N=CR^{h}₂, -NR^{h}₂, -NHR^{h}, -NCO, or a halogen (in these formulae, R^{h} represents a substituted or unsubstituted C₁₋₄ alkyl group), and more preferably -OR^{h} (that is, an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among them, an alkyl group, in particular an unsubstituted alkyl group, is preferred, and a methyl group or an ethyl group is more preferred. In one embodiment, R^{h} is a methyl group, and in another embodiment, R^{h} is an ethyl group.

R³⁵ is each independently a monovalent organic group. Such a monovalent organic group is a monovalent organic group excluding the above hydrolyzable group.

In R³⁵, the monovalent organic group is preferably a C₁₋₂₀ alkyl group, more preferably a C₁₋₆ alkyl group, and still more preferably a methyl group.

n2 is each independently an integer of 0 to 3 for each (SiR³⁴ₙ₂R³⁵₃₋ₙ₂) unit, However, in the end moiety of the formula (S4), at least two (SiR³⁴ₙ₂R³⁵₃₋ₙ₂) units with n2 of 1 to 3 are present. In other words, in the end moiety of the formula (S4), at least two Si atoms to which a hydroxyl group or a hydrolyzable group is bonded are present.

n2 is each independently an integer of preferably 1 to 3, more preferably 2 to 3, and still more preferably 3 for each (SiR³⁴ₙ₂R³⁵₃₋ₙ₂) unit.

R^{33'} is each independently a hydrogen atom, a hydroxyl group, or a monovalent organic group. Such a monovalent organic group is a monovalent organic group excluding the hydrolyzable group.

In R^{33'}, the monovalent organic group is preferably a C₁₋₂₀ alkyl group or -(CₛH₂ₛ)ₜ₁-(O-CₛH₂ₛ)ₜ₂ (wherein s is an integer of 1 to 6, preferably an integer of 2 to 4, t1 is 1 or 0, preferably 0, and t2 is an integer of 1 to 20, preferably an integer of 2 to 10, and more preferably an integer of 2 to 6), more preferably a C₁₋₂₀ alkyl group, even more preferably a C₁₋₆ alkyl group, and particularly preferably a methyl group.

In one embodiment, R^{33'} is a hydroxyl group.

In another embodiment, R^{33'} is a monovalent organic group, preferably a C₁₋₂₀ alkyl group, and more preferably a C₁₋₆ alkyl group.

q2' is each independently an integer of 0 to 3, and r2' is each independently an integer of 0 to 3. Note that the sum of q2' and r2' is 3 in the (CR^{32'}_{q2'}-R^{33'}_{r2'}) unit.

q2' is each independently an integer of preferably 1 to 3, more preferably 2 to 3, and still more preferably 3 for each (CR³²'_{q2'}R^{33'}_{r2'}) unit.

R³² is each independently -Z³SiR³⁴ₙ₂R³⁵₃₋ₙ₂. Such -Z³-SiR³⁴ₙ₂R³⁵₃₋ₙ₂ has the same definition as described for R^{32'}.

R³³ is each independently a hydrogen atom, a hydroxyl group, or a monovalent organic group. Such a monovalent organic group is a monovalent organic group excluding the above hydrolyzable group.

In R³³, the monovalent organic group is preferably a C₁₋₂₀ alkyl group or -(CₛH₂ₛ)ₜ₁-(O-CₛH₂ₛ)t₂ (wherein s is an integer of 1 to 6, preferably an integer of 2 to 4, t1 is 1 or 0, preferably 0, and t2 is an integer of 1 to 20, preferably an integer of 2 to 10, and more preferably an integer of 2 to 6), more preferably a C₁₋₂₀ alkyl group, even more preferably a C₁₋₆ alkyl group, and particularly preferably a methyl group.

In one embodiment, R³³ is a hydroxyl group.

In another embodiment, R³³ is a monovalent organic group, preferably a C₁₋₂₀ alkyl group, and more preferably a C₁₋₆ alkyl group.

p2 is each independently an integer of 0 to 3, q2 is each independently an integer of 0 to 3, and r2 is each independently an integer of 0 to 3. Note that the sum of p2, q2, and r2 is 3 in the (CR³¹ₚ₂R³²_{q2}R³³ᵣ₂) unit.

In one embodiment, p2 is 0.

In one embodiment, p2 may be each independently an integer of 1 to 3, an integer of 2 to 3, or 3 for each (CR³¹ₚ₂R³²_{q2}R³³ᵣ₂) unit. In a preferred embodiment, p2 is 3.

In one embodiment, q2 is each independently an integer of 1 to 3, preferably an integer of 2 to 3, and more preferably 3 for each (CR³¹ₚ₂R³²_{q2}R³³ᵣ₂) unit.

In one embodiment, p2 is 0, and q2 is each independently an integer of 1 to 3, preferably an integer of 2 to 3, and still more preferably 3 for each (CR³¹ₚ₂R³²_{q2}R³³ᵣ₂) unit.

R^{e1} is each independently -Z³-SiR³⁴ₙ₂R³⁵₃₋ₙ₂. Such -Z³-SiR³⁴ₙ₂R³⁵₃₋ₙ₂ has the same definition as described for R^{32'}.

R^{f1} is each independently a hydrogen atom, a hydroxyl group, or a monovalent organic group. Such a monovalent organic group is a monovalent organic group excluding the above hydrolyzable group.

In R^{f1}, the monovalent organic group is preferably a C₁₋₂₀ alkyl group or -(CₛH₂ₛ)ₜ₁-(O-CₛH₂ₛ)ₜ₂ (wherein s is an integer of 1 to 6, preferably an integer of 2 to 4, t1 is 1 or 0, preferably 0, and t2 is an integer of 1 to 20, preferably an integer of 2 to 10, and more preferably an integer of 2 to 6), more preferably a C₁₋₂₀ alkyl group, even more preferably a C₁₋₆ alkyl group, and particularly preferably a methyl group.

In one embodiment, R^{f1} is a hydroxyl group.

In another embodiment, R^{f1} is a monovalent organic group, preferably a C₁₋₂₀ alkyl group, and more preferably a C₁₋₆ alkyl group.

k2 is each independently an integer of 0 to 3, 12 is each independently an integer of 0 to 3, and m2 is each independently an integer of 0 to 3. The sum of k2, 12, and m2 is 3 in the (CR^{d1}ₖ₂R^{e1}ₗ₂R^{f1}ₘ₂) unit.

In one embodiment, when n2 is 1 to 3 (preferably 2 or 3, and more preferably 3), the number of (SiR³⁴ₙ₂R³⁵₃₋ₙ₂) units is 2 or more, such as 2 to 27, preferably 2 to 9, more preferably 2 to 6, still more preferably 2 to 3, and particularly preferably 3 in each end moiety of the formula (S4).

In a preferred embodiment, when R^{32'} is present in the formula (S4), n2 is an integer of 1 to 3, preferably 2 or 3, and more preferably 3 in at least one, preferably all of R^{32'} groups.

In a preferred embodiment, when R³² is present in the formula (S4), n2 is an integer of 1 to 3, preferably 2 or 3, and more preferably 3 in at least one, preferably all of R³² groups.

In a preferred embodiment, when R^{e1} is present in the formula (S4), n2 is an integer of 1 to 3, preferably 2 or 3, and more preferably 3 in at least one, preferably all of R^{a1} groups.

In a preferred embodiment, in the formula (S4), k2 is 0, 12 is 2 or 3, preferably 3, and n2 is 2 or 3, preferably 3.

R^{g1} and R^{h1} are each independently -Z⁴SiR¹¹ₙ₁R¹²₃₋ₙ₁, - Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂. Here, R¹¹, R¹², R^{a1}, R^{b2}, R^{c1}, R^{d1}, R^{e1}, R^{f1}, n1, k1, 11, m1, k2, l2, and m2 have the same definitions as those described above.

In a preferred embodiment, R^{g1} and R^{h1} are each independently -Z⁴-SiR¹¹ₙ₁R¹²₃₋ₙ₁.

Z⁴ is each independently a single bond, an oxygen atom, or a divalent organic group. Note that the structure denoted as Z⁴ hereinafter is bonded to (SiR¹¹ₙ₁R¹²₃₋ₙ₁) on its right side.

In one embodiment, Z⁴ is an oxygen atom.

In one embodiment, Z⁴ is a divalent organic group.

In a preferred embodiment, Z⁴ does not contain a siloxane bond.

Z⁴ is preferably a C₁₋₆ alkylene group, -(CH₂)_{z5"}-O-(CH₂)_{z6"}- (wherein z5" is an integer of 0 to 30, such as an integer of 1 to 30, an integer of 0 to 6 or an integer of 1 to 6, and z6" is an integer of 0 to 30, such as an integer of 1 to 30, an integer of 0 to 6 or an integer of 1 to 6), or -(CH₂)_{z7"}-phenylene-(CH₂)_{z8"}- (wherein z7" is an integer of 0 to 30, such as an integer of 1 to 30, an integer of 0 to 6 or an integer of 1 to 6, and z8" is an integer of 0 to 30, such as an integer of 1 to 30, an integer of 0 to 6 or an integer of 1 to 6). Such a C₁₋₆ alkylene group may be linear or may be branched, and is preferably linear. These groups are optionally substituted with, for example, one or more substituents selected from a fluorine atom, a C₁₋₆ alkyl group, a C₂₋₆ alkenyl group, and a C₂₋₆ alkynyl group, and are preferably unsubstituted.

In a preferred embodiment, Z⁴ is a C₁₋₆ alkylene group or -(CH₂)_{z7"}-phenylene-(CH₂)_{z8"}-, and preferably - phenylene-(CH₂)_{z8"}-. When Z³ is such a group, light resistance, in particular ultraviolet resistance, can be further enhanced.

In another preferred embodiment, Z⁴ is a C₁₋₃ alkylene group. In one embodiment, Z⁴ may be -CH₂CH₂CH₂-. In another embodiment, Z⁴ may be -CH₂CH₂-. In another embodiment, Z⁴ may be -CH₂CH₂CH₂CH₂CH₂CH₂CH₂CH₂CH₂CH₂CH₂--

In one embodiment, the formulae (S1), (S2), (S3), and (S4) do not contain a siloxane bond.

In one embodiment, R^{Si} is a group represented by the formula (S2), (S3), or (S4).

In one embodiment, R^{Si} is a group represented by the formula (S3), (S4), or (S5).

In one embodiment, R^{Si} is a group represented by the formula (S1). In a preferred embodiment, n1 is 1 to 3, preferably 2 to 3, and even more preferably 3.

In one embodiment, R^{Si} is a group represented by the formula (S2). In a preferred embodiment, n1 is 1 to 3, preferably 2 to 3, and even more preferably 3.

In one embodiment, R^{Si} is a group represented by the formula (S3). In a preferred embodiment, the formula (S3) is -SiR^{a1}₂R^{c1} or -SiR^{a1}₃, R^{a1} is -Z¹SiR²²_{q1}R²³ᵣ₁, Z¹ is a C₁₋₆ alkylene group, -(CH₂)_{z1}-O-(CH₂)_{z2}- (wherein z1 is an integer of 0 to 6, such as an integer of 1 to 6, and z2 is an integer of 0 to 6, such as an integer of 1 to 6), or -(CH₂)_{z3}-phenylene-(CH₂)_{z4}- (wherein z3 is an integer of 0 to 6, such as an integer of 1 to 6, and z4 is an integer of 0 to 6, such as an integer of 1 to 6), preferably a C₁₋₆ alkylene group, and q1 is 1 to 3, preferably 2 to 3, and still more preferably 3.

In one embodiment, R^{Si} is a group represented by the formula (S4). In a preferred embodiment, the formula (S4) is -CR^{e1}₂R^{f1} or -CR^{e1}₃, R^{e1} is -Z³-SiR³⁴ₙ₂R³⁵₃₋ₙ₂, Z³ is a C₁₋₆ alkylene group, -(CH₂)_{z5"}-O-(CH₂)_{z6"}- (wherein z5" is an integer of 0 to 6, such as an integer of 1 to 6, and z6" is an integer of 0 to 6, such as an integer of 1 to 6), or -(CH₂)_{z7"}-phenylene-(CH₂)_{z8"}- (wherein z7" is an integer of 0 to 6, such as an integer of 1 to 6, and z8" is an integer of 0 to 6, such as an integer of 1 to 6), preferably a C₁₋₆ alkylene group, and n2 is 1 to 3, preferably 2 to 3, and still more preferably 3.

In one embodiment, R^{Si} is a group represented by the formula (S5). In a preferred embodiment, R^{g1} and R^{h1} are -Z⁴-SiR¹¹ₙ₁R¹²₃₋ₙ₁, Z⁴ is a C₁₋₆ alkylene group, -(CH₂)_{z5"}-O-(CH₂)_{z6"}- (wherein z5" is an integer of 0 to 6, such as an integer of 1 to 6, and z6" is an integer of 0 to 6, such as an integer of 1 to 6), or -(CH₂)_{z7"}-phenylene-(CH₂)_{z8"}-(wherein z7" is an integer of 0 to 6, such as an integer of 1 to 6, and z8" is an integer of 0 to 6, such as an integer of 1 to 6), preferably a C₁₋₆ alkylene group, and n1 is 1 to 3, preferably 2 to 3, and still more preferably 3.

In a preferred embodiment, in the compound of the present disclosure,
Rf is C₆F₅-,
X^{A} is a C₁₁₋₃₀ alkylene group, or a group represented by the following formula:

   -X^{C}-X^{D}-X^{E}-

   wherein
X^{C} is -CONH-,
X^{D} is a C₈₋₃₀ alkylene group, and
X^{E} is -CO-,
R^{Si} is a group represented by the following formula (S2) or (S5):

   -**SiR¹¹ₙ₁R¹²₃₋ₙ₁** **(S2)**

   -**NR^{g1}R^{h1}** **(S5)**

   wherein
R¹¹ is each independently a hydroxyl group or a hydrolyzable group,
R¹² is each independently a monovalent organic group,
n1 is an integer of 1 to 3,
R^{g1} and R^{h1} are each independently -Z⁴SiR¹¹ₙ₁R¹²₃₋ₙ₁, and
Z⁴ is a C₁₋₃₀ alkylene group,
α1 is 1, and
β1 is 1.

Specific examples of the compound of the present disclosure include the following compounds.

C₆F₅(CH₂)₁₈Si(OCH₃)₃,

C₆F₅CONH(CH₂)₁₁CON(CH₂CH₂CH₂Si(OCH₃)₃)₂

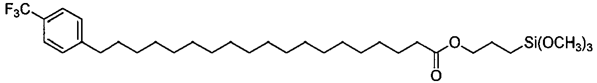

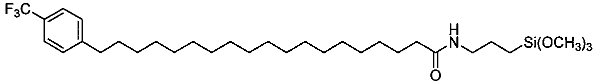

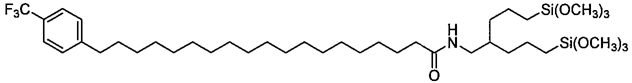

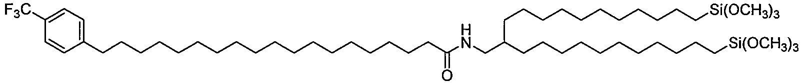

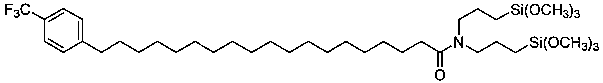

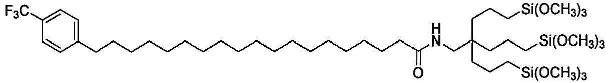

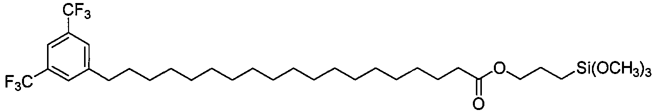

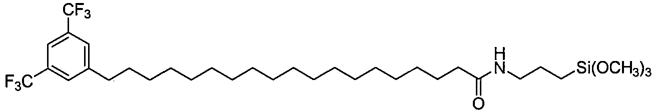

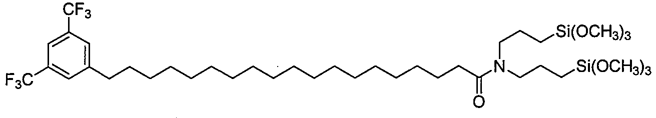

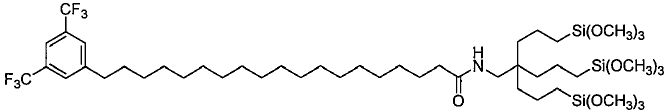

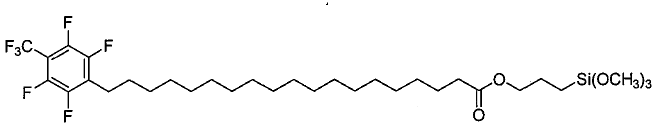

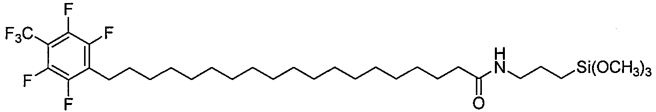

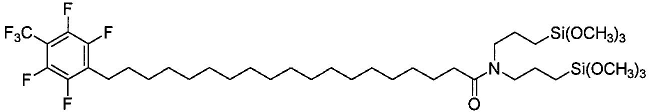

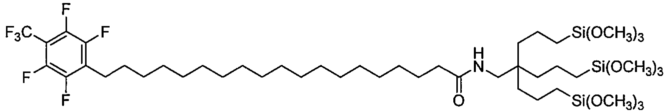

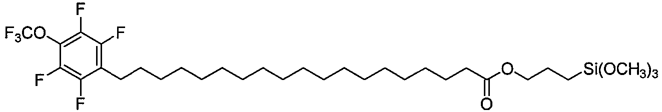

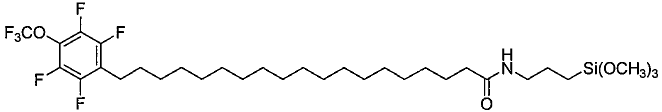

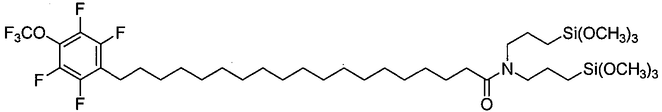

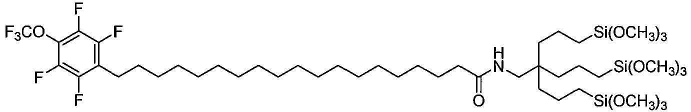

Hereinafter, a method for producing the fluorine containing silane compound of the present disclosure will be described. Note that the method for producing the fluorine containing silane compound of the present disclosure is not limited to the method below.

As a method for producing a group containing Rf_{α1}-, that is, a group containing an aromatic group having a fluorine atom or a fluorine containing substituent, there are two methods: one is to derive it from a compound having an aromatic group having a fluorine atom or a fluorine containing substituent, and the other is to fluorinate a functional group and introduce it.

### (Production Method 1)

The present production method includes the following step.
Step (I) : A compound (11): Rf_{α1}-X_{B}-X_{C}-R^{j111}-NH₂ is used as a raw material and mixed with an isocyanate compound (12): O=C=N-R^{j112}-R^{Si} to produce a fluorine atom containing silane compound (13).

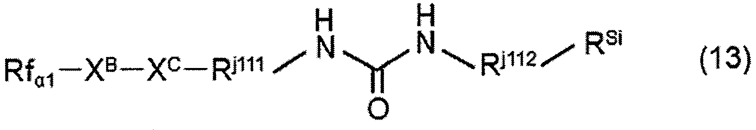

R^{j111} is a single bond or an alkylene group, such as a C₁₋₃₀ alkylene group, and specifically a methylene group, an ethylene group, a propylene group, a butylene group, a pentylene group, a hexylene group, a heptylene group, an octylene group, a nonylene group, a decylene group, an undecylene group, a dodecylene group, a tridecylene group, a tetradecylene group, a pentadecylene group, a hexadecylene group, a heptadecylene group, an octadecylene group, a nonadecylene group, and an eicosadecylene group.

Specific examples of the compound (11) include pentafluoroaniline, 2,3,4,5,6-pentafluorobenzenemethanamine, 2,3,4,5,6-pentafluorobenzenethanamine, 2,3,4,5,6-pentafluorobenzenepropanamine, 2,3,4,5,6-pentafluorobenzenebutanamine, 2,3,4,5,6-pentafluorobenzenepentanamine, 2,3,4,5,6-pentafluorobenzenehexanamine, 2,3,4,5,6-pentafluorobenzeneheptanamine, 2,3,4,5,6-pentafluorobenzeneoctanamine, 2,3,4,5,6-pentafluorobenzenenonanamine, 2,3,4,5,6-pentafluorobenzenedecanamine, 2,3,4,5,6-pentafluorobenzeneundecanamine, 2,3,4,5,6-pentafluorobenzenedodecanamine, 2,3,4,5,6-pentafluorobenzenetridecanamine, 2,3,4,5,6-pentafluorobenzenetetradecanamine, 2,3,4,5,6-pentafluorobenzenepentadecanamine, 2,3,4,5,6-pentafluorobenzenehexadecanamine, 2,3,4,5,6-pentafluorobenzeneheptadecanamine, 2,3,4,5,6-pentafluorobenzeneoctadecanamine, 2,3,4,5,6-pentafluorobenzenenonadecanamine, 2,3,4,5,6-pentafluorobenzeneicosanamine, 2,3,4,5,6-pentafluorobenzenehenicosanamine, 2,3,4,5,6-pentafluorobenzenetetracosanamine, 2,3,4,5,6-pentafluorobenzenehentriacontanamine, 4-trifluoromethylaniline, 4-trifluoromethoxyaniline, 4-difluoromethylaniline, 4-difluoromethoxyaniline, 2,3,5,6-tetrafluoro-4-trifluoromethylaniline, 2,3,5,6-tetrafluoro-4-trifluoromethoxyaniline, 2,3,5,6-tetrafluoro-4-difluoromethylaniline, 2,3,5,6-tetrafluoro-4-difluoromethoxyaniline.

R^{j112} is a single bond or an alkylene group, and is, for example, an alkylene group, and specifically a C₁₋₃₀ alkylene group.

Specific examples of the isocyanate compound (12) may include 3-(trimethoxysilyl)propyl isocyanate.

Rf, X_{B}, X_{C}, R^{Si} and α1 are the same as defined above.

The above reaction may be performed in a solvent. The solvent is preferably one that can dissolve the compound (11) to the compound (13). The solvent may be used alone as one type, or may be used in combination of two or more types.

The solvent is, for example, a non-fluorinated solvent or a fluorinated solvent.

Examples of the non-fluorinated solvent may include a S atom containing solvent, an amide solvent, an ester solvent, a ketone solvent, an ether solvent, a halogen containing solvent, and a hydrocarbon solvent.

Examples of the S atom containing solvent may include dimethyl sulfoxide, sulfolane, dimethyl sulfide, and carbon disulfide.

Examples of the amide solvent may include N-methylpyrrolidone, N,N-dimethylformamide, dimethylacetamide, and hexamethylphosphoric triamide.

Examples of the ester solvent may include methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate.

Examples of the ketone solvent may include acetone, methyl ethyl ketone, methyl isobutyl ketone, 2-hexanone, cyclohexanone, methyl amino ketone, and 2-heptanone.

Examples of the ether solvent may include diethyl ether, tetrahydrofuran, cyclopentyl methyl ether, ethylene glycol, monoglyme, and diglyme.

Examples of the halogen containing solvent may include dichloromethane and chloroform.

Examples of the hydrocarbon solvent may include pentane, hexane, heptane, benzene, and toluene.

The fluorinated solvent is a solvent containing one or more fluorine atoms. Examples of the fluorinated solvent may include a compound in which at least one of the hydrogen atoms of a hydrocarbon is replaced by a fluorine atom, such as a hydrofluorocarbon, a hydrochlorofluorocarbon, and a perfluorocarbon; and a hydrofluoroether. Here, the term "hydrocarbon" refers to a compound that contains only carbon and hydrogen atoms.

Examples of the hydrofluorocarbon may include bis(trifluoromethyl)benzene, specifically 1,3-bis(trifluoromethyl)benzene (m-XHF), 1,1,1,2,2,3,3,4,4,5,5,6,6-tridecafluorooctane, C₆F₁₃CH₂CH₃ (for example, Asahiklin (R) AC-6000 manufactured by AGC Inc.), and 1,1,2,2,3,3,4-heptafluorocyclopentane (for example, Zeorora (R) H manufactured by ZEON Corporation).

Examples of the hydrochlorofluorocarbon may include HCFC-225 (for example, Asahiklin AK-225 manufactured by AGC Inc.) and HFO-1233zd(Z) (for example, Celefin 1233Z manufactured by Central Glass Co., Ltd.).

Examples of the perfluorocarbon may include perfluorohexane, perfluoromethylcyclohexane, perfluoro-1,3-dimethylcyclohexane, and perfluorobenzene.

Examples of the hydrofluoroether may include an alkyl perfluoroalkyl ether (the perfluoroalkyl group and the alkyl group may be linear or branched) such as perfluoropropyl methyl ether (C₃F₇OCH₃) (for example, Novec (R) 7000 manufactured by Sumitomo 3M Limited), perfluorobutyl methyl ether (C₄F₉OCH₃) (for example, Novec (R) 7100 manufactured by Sumitomo 3M Limited), perfluorobutyl ethyl ether (C₄F₉OC₂H₅) (for example, Novec (R) 7200 manufactured by Sumitomo 3M Limited), and perfluorohexyl methyl ether (C₂F₅CF(OCH₃)C₃F₇) (for example,Novec (R) 7300 manufactured by Sumitomo 3M Limited); and CF₃CH₂OCF₂CHF₂ (for example, Asahiklin (R) AE-3000 manufactured by AGC Inc.).

Among the fluorinated solvents listed above, m-XHF, HFE7100, HFE7200, HFE7300, AC-6000, perfluorohexane, and perfluorobenzene are preferred.

The solvent is preferably at least one selected from the group consisting of diethyl ether, tetrahydrofuran, cyclopentyl methyl ether, ethylene glycol, dichloromethane, chloroform, benzene, toluene, and 1,3-bis(trifluoromethyl)benzene, and is more preferably at least one selected from the group consisting of dichloromethane, chloroform, toluene, and 1,3-bis(trifluoromethyl)benzene.

The reaction temperature is not limited. For example, the reaction temperature may be 0 to 100°C, 0 to 50°C, or 0 to 30°C.

### (Production Method 2)

In the present production method, Rf and a carbonyl group (-C(=O)-) containing compound are allowed to react with an olefin (-CH=CH₂) containing amine compound, thereby producing an olefin containing amide compound, from which the fluorine atom containing silane compound of the present disclosure can be synthesized. For example, an amide compound containing an olefin at an end is allowed to react with a compound represented by the following formula:

HSiR^{j27}ₘ₃R^{j28}₃₋ₘ₃

wherein
R^{j27} is each independently a hydroxyl group or a hydrolyzable group;
R^{j28} is each independently a monovalent organic group; and
m3 is 1 to 3,
thereby obtaining the fluorine atom containing silane compound. The monovalent organic group does not contain a hydrolyzable group.

The olefin containing amine compound is a compound having H₂N- and -CH=CH₂, and is, for example, H₂N(CH₂)ₓ₃₁Q((CH₂)ₓ₃₂CH=CH₂)ₓ₃₃R^{x3}ₓ₃₄ (wherein x31 and x32 are each an integer of 0 to 6, x33 is an integer of 1 or more, x34 is an integer of 0 or more, the sum of x33 and x34 is the valence of Q - 1, Q is N, Si, or C, and R^{x3} is a hydrogen atom, a hydroxyl group, or a monovalent organic group).

Examples of the olefin containing amine compound include allylamine, diallylamine, 2-allylpent-4-en-1-amine (H₂NCH₂CH(CH₂CH=CH₂)₂), and 2,2-diallylpent-4-en-1-amine (H₂N-CH₂C(CH₂CH=CH₂)₃).

The carbonyl group containing compound is a compound containing Rf_{α1}-X_{B}-X_{C}- and a C(=O) group. Examples of the carbonyl group containing compound may include the compounds described in the synthesis methods described below, or a compound represented by the following formula (21).

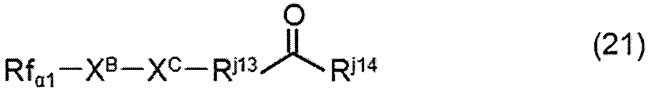

In the formula (21), R^{j13} is a single bond or alkylene group, and is, for example, a single bond; and R^{j14} is a hydroxyl group, a fluorine atom, a chlorine atom, or a -O-lower alkyl group (that is, an alkoxide group), and is, for example, a hydrogen atom, a methoxide group, or an ethoxide group, and specifically, a hydrogen atom or a methoxide group.

Specific examples of the compound of formula (21) include compounds having a carboxyl group at an end, such as pentafluorobenzoic acid, pentafluorophenylacetic acid, pentafluorophenylpropionic acid, pentafluorophenylbutyric acid, pentafluorophenylvaleric acid, pentafluorophenylcaproic acid, 4-trifluoromethylbenzoic acid, 4-trifluoromethoxybenzoic acid, 4-difluoromethylbenzoic acid, 4-difluoromethoxybenzoic acid, 2,3,5,6-tetrafluoro-4-trifluoromethylbenzoic acid, 2,3,5,6-tetrafluoro-4-trifluoromethoxybenzoic acid, 2,3,5,6-tetrafluoro-4-difluoromethylbenzoic acid, and 2,3,5,6-tetrafluoro-4-difluoromethoxybenzoic acid, and methyl esters and acid chlorides thereof.

When the carbonyl group containing compound has acid chloride (C(=O)Cl), the olefin containing amide compound can be obtained by allowing it to react with a trialkylamine. Examples of the trialkylamine may include triethylamine.

When the carbonyl group containing compound has a carboxylic acid, the olefin containing amide compound can be obtained by allowing it to react with a condensing agent.

As the condensing agent, it is preferable to use 1-(3-dimethylaminopropyl)-3-ethylcarbodiimide (EDC), 1-(3-dimethylaminopropyl)-3-ethylcarbodiimide hydrochloride (EDC-HCl), N,N'-dicyclohexylcarbodiimide (DCC), 1-[bis(dimethylamino)methylene]-1H-1,2,3-triazolo[4,5-b]pyridinium 3-oxide hexafluorophosphate (HATU), 1-[bis(dimethylamino)methylene]-1H-benzotriazolium 3-oxide hexafluorophosphate (HBTU), 1-[bis(dimethylamino)methylene]-1H-1,2,3-triazolo[4,5-b]pyridinium 3-oxide tetrafluoroborate (TATU), 1-[bis(dimethylamino)methylene]-1H-benzotriazolium 3-oxide tetrafluoroborate (TBTU), (1-cyano-2-ethoxy-2-oxoethylideneaminooxy)dimethylaminomorpholinocarbenium hexafluorophosphate (COMU), O-[(ethoxycarbonyl)cyanomethyleneamino]-N,N,N',N'-tetramethyluronium hexafluorophosphate (HOTU), 1H-benzotriazol-1-yloxytripyrrolidinophosphonium hexafluorophosphate (PyBOP), 1H-benzotriazol-1-yloxytris(dimethylamino)phosphonium hexafluorophosphate (BOP), bromotripyrrolidinophosphonium hexafluorophosphate (PyBroP), diphenylphosphoryl azide (DPPA), 4-(4,6-dimethoxy-1,3,5-triazin-2-yl)-4-methylmorpholinium chloride (DMT-MM), 1-hydroxybenzotriazole (HOBt), or 1-hydroxy-7-azabenzotriazole (HOAt), and it is preferable to use 1-(3-dimethylaminopropyl)-3-ethylcarbodiimide hydrochloride, N,N'-dicyclohexylcarbodiimide, or 1-hydroxybenzotriazole. Furthermore, 4-dimethylaminopyridine (DMAP) or the like may be added as a catalyst.

When the carbonyl group containing compound has an ester, the olefin containing amide compound can be obtained by allowing it to react in the presence of a base.

As the base, it is preferable to use 1,5,7-triazabicyclo[4.4.0]dec-5-ene (TBD), 1,2,4-triazole, 1,8-diazabicyclo[5.4.0]-7-undecene (DBU), sodium methoxide, or sodium tert-butoxide, and it is more preferable to use 1,5,7-triazabicyclo[4.4.0]dec-5-ene.

The reaction temperature is not limited. For example, the reaction temperature may be 0 to 150°C, 0 to 100°C, or 0 to 50°C.

The solvent to be used can be the same as in Production Method 1. The solvent is preferably acetonitrile, dichloromethane, chloroform, toluene, diethyl ether, or tetrahydrofuran. The reaction may also be carried out with no solvent.

### (Production Method 3)

In the present production method, an olefin group containing compound is used as a raw material to produce a fluorine atom containing silane compound.

The olefin group containing compound is a compound having Rf_{α1}-X_{B}-X_{C}- and an olefin group (-CH=CH₂). Examples of the olefin group containing compound include 2,3,4,5,6-pentafluorostyrene, 1,2,3,4,5-pentafluoro-6-(2-propen-1-yl)benzene, 1-(3-buten-1-yl)-2,3,4,5,6-pentafluorobenzene, 1-ethenyl-4-(trifluoromethyl)benzene, 1-ethenyl-4-(trifluoromethoxy)benzene, 1-ethenyl-4-(difluoromethyl)benzene, 1-ethenyl-4-(difluoromethoxy)benzene, 2,3,5,6-tetrafluoro-1-ethenyl-4-(trifluoromethyl)benzene, 2,3,5,6-tetrafluoro-1-ethenyl-4-(trifluoromethoxy)benzene, 2,3,5,6-tetrafluoro-1-ethenyl-4-(difluoromethyl)benzene, 2,3,5,6-tetrafluoro-1-ethenyl-4-(difluoromethoxy)benzene, and compounds obtained by the synthesis method described below.

For example, by a method including: allowing an olefin group to react with HSiM₃ (M is each independently a halogen atom or a C₁₋₆ alkoxy group) and further allowing the resulting compound to react with a compound represented by the formula: Hal-J-CH=CH₂ (wherein J represents Mg, Cu, Pd, or Zn, and Hal represents a halogen atom), and
if desired,
a compound represented by the formula: R^{c}_{h'}L (wherein R^{c} is the same as defined above, L represents a group that can be bonded to R^{c}, and h' is an integer of 1 to 3), thereby obtaining the following compound:

   Rf_{α1}-X^{B}-X^{C}-R^{j21} - CH₂CH₂ - SiR^{c'}ₘ(CH=CH₂)_{k'}
(-R^{j21}-CH₂CH₂- corresponds to X^{D}-X^{E}-X^{F}. For example, -R^{j21}-CH₂CH₂- is an alkylene group, such as a C₁₋₃₀ alkylene group, and specifically a C₁₀₋₂₅ alkylene group); and
   allowing the above compound to react with HSiM₃ (wherein M is each independently a halogen atom or a C₁₋₆ alkoxy group), and if desired,
   a compound represented by the formula: R²³_{i'}L' (wherein R²³ is the same as defined above, L' represents a group that can be bonded to R²³, and i' is an integer of 1 to 3),
and if desired,
a compound represented by the formula: R²⁴_{j'}L" (wherein R²⁴ is the same as defined above, L" represents a group that can be bonded to R²⁴, and j' is an integer of 1 to 3),
the following formula:

   Rf_{α1}-X_{B}-X_{C}-R^{j22}-R^{Si}
(R^{j22} is a divalent organic group, and corresponds to - R^{j21}-CH₂CH₂-. R^{Si} is the same as defined above, and for example, R^{Si} is represented by the formula (S3))
can be produced. Note that the above description can be applied to other olefin group containing compounds as well.

### (Production Method 4)

In the present production method, a carbonyl group containing compound is allowed to react with an amine containing silane compound, thereby producing a fluorine atom containing silane compound.

The carbonyl group containing compound is a compound containing Rf_{α1}-X_{B}-X_{C}- and C(=O). Examples of the carbonyl group containing compound may include the compounds obtained by the synthesis methods described below, or a compound represented by the following formula (21). 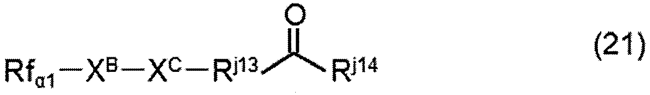 R^{j13} and R^{j14} are the same as defined above.

The amine containing silane compound is a compound having a H₂N- group and a R^{Si} group. Examples of the amine containing silane compound may include H₂N-R^{j23}R^{Si}, and specific examples thereof may include aminopropyltrimethoxysilane. R^{j23} is an alkylene group, such as a C₁₋₄ alkylene group, specifically a methylene group, an ethylene group, or a propylene group; and R^{Si} is the same as defined above, and for example, R^{Si} is represented by the formula (S2).

The fluorine atom containing silane compound is, for example, Rf-R^{j24}C(=O)NHR^{j23}-R^{Si}. R^{j24} is an alkylene group, such as a C₁₋₄ alkylene group, and specifically a methylene group, an ethylene group, or a propylene group.

The reaction temperature is preferably 0°C to 150°C, and more preferably 20°C to 100°C.

The solvent to be used can be the same as in Production Method 1, and preferably, toluene, dichloromethane, chloroform, methanol, or ethanol can be used.

### (Production Method 5)

In the present production method, an olefin group containing compound is allowed to react, thereby producing a fluorine atom containing silane compound.

Specifically, the olefin group containing compound is allowed to react with a compound represented by the following formula:

HSiR^{j25}m₃R^{j26}₃₋ₘ₃

wherein
R^{j25} is each independently a hydroxyl group or a hydrolyzable group;
R^{j26} is each independently a monovalent organic group; and
m3 is 1 to 3,
thereby obtaining the fluorine atom containing silane compound. Note that the above description can be applied to other olefin group containing compounds as well.

The olefin group containing compound is a compound having Rf and an olefin group. Examples of the olefin group containing compound may include the compounds obtained by the synthesis methods described below.

The reaction temperature is preferably -20°C to 150°C, and more preferably 0°C to 100°C.

The solvent to be used can be the same as in Production Method 1, and preferably, toluene, dichloromethane, chloroform, methanol, ethanol, diethyl ether, or cyclopentyl methyl ether can be used.

### (Synthesis Method 1)

In the present method, a compound (31) having a group containing Rf and a hydroxyl group: Rf-R^{j33}-OH is used as a raw material to synthesize a carbonyl group containing compound.

R^{j33} is an alkylene group, such as a C₁₋₃₀ alkylene group.

Specific examples of the compound (31) include pentafluorophenol, pentafluorobenzyl alcohol, 2,3,4,5,6-pentafluorobenzenepropanol, 2,3,4,5,6-pentafluorobenzenebutanol, 4-(trifluoromethyl)phenol, 4-(trifluoromethyl)benzenemethanol, 2-(4-trifluoromethylphenyl)ethanol, 4-(trifluoromethyl)benzenepropanol, 4-(trifluoromethyl)benzene butanol, 4-(trifluoromethoxy)phenol, 4-(trifluoromethoxy)benzenemethanol, 2-(4-trifluoromethoxyphenyl)ethanol, 4-(trifluoromethoxy)benzenepropanol, 4-(trifluoromethoxy)benzenebutanol, 2,3,5,6-tetrafluoro-4-(trifluoromethyl)benzenemethanol, 2-(2,3,5,6-tetrafluoro-4-trifluoromethylphenyl)ethanol, 2,3,5,6-tetrafluoro-4-(trifluoromethyl)benzenepropanol, 2,3,5,6-tetrafluoro-4-(trifluoromethyl)benzenebutanol, 2,3,5,6-tetrafluoro-4-(trifluoromethoxy)phenol, 2,3,5,6-tetrafluoro-4-(trifluoromethoxy)benzenemethanol, 2-(2,3,5,6-tetrafluoro-4-trifluoromethoxyphenyl)ethanol, 2,3,5,6-tetrafluoro-4-(trifluoromethoxy)benzenepropanol, and 2,3,5,6-tetrafluoro-4-(trifluoromethoxy)benzenebutanol.

The hydroxyl group of the compound (31) is converted to -OTf (Tf is a trifluoromethylsulfonyl group) by a conventional method, thereby obtaining a compound (32): Rf-R^{j33}-OTf.

The present method includes the following step (I'). (I'): The above compound (32) is mixed with a compound (33) having a reactive group to obtain a carbonyl group containing compound (34).

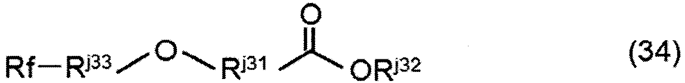

Here, examples of the reactive group may include a hydroxyl group, a carboxyl group, Cl, F, and an ester group in which a carboxyl group is esterified.

Specific examples of the compound (33) having a reactive group may include: a compound having a hydroxyl group at an end, such as tert-butyl 9-hydroxy-4,7-dioxanonanoate, tert-butyl 12-hydroxy-4,7,10-trioxadodecanoate, and tert-butyl 1-hydroxy-3,6,9,12-tetraoxapentadecan-15-oate; and a compound having a carboxyl group at an end, such as 10-hydroxydecanoic acid, 11-hydroxyundecanoic acid, 12-hydroxydodecanoic acid, 13-hydroxytridecanoic acid, 14-hydroxytetradecanoic acid, 15-hydroxypentadecanoic acid, 16-hydroxyhexadecanoic acid, 17-hydroxyheptadecanoic acid, 18-hydroxyoctadecanoic acid, 19-hydroxynonadecanoic acid, 20-hydroxyeicosanoic acid, 21-hydroxyheneicosanoic acid, 22-hydroxydocosanoic acid, 23-hydroxytricosanoic acid, 24-hydroxytetracosanoic acid, 25-hydroxypentacosanoic acid, and 30-hydroxytriacontanoic acid; and methyl esters and acid chlorides thereof.

R^{j31} is a divalent organic group, and is, for example, a group having a polyether group or an alkylene group, and specifically, a -(R^{j35}O)ₙ-R^{j36}- group or a C₁₋₃₀ alkylene group.

R^{j35} is a C₁₋₃ alkylene group, such as an ethylene group, and R^{j36} is a C₁₋₃ alkylene group, such as an ethylene group.

n is an integer of 2 to 150, such as an integer of 2 to 50.

R^{j32} is a lower alkyl group, such as a methyl group, an ethyl group, a propyl group, a butyl group, or a tert-butyl group, and is specifically a methyl group or a tert-butyl group.

The reaction temperature is not limited. For example, the reaction can be performed at a reaction temperature of -80 to 200°C, such as -50 to 100°C, and specifically -20 to 50°C.

The solvent to be used can be the same one as in Production Method 1.

### (Synthesis Method 2)

In the present method, a compound (31) having a group containing Rf and a hydroxyl group: Rf-R^{j33}-OH is used as a raw material to synthesize an olefin containing compound. Each sign is the same as defined above.

The hydroxyl group of the compound (31) is converted to -OTf (Tf is a trifluoromethylsulfonyl group) by a conventional method to produce a compound (32): Rf-R^{j33}-OTf.

The present method includes the following step (I'). (I'): The above compound (32) is mixed with a compound (35) having a reactive group: HO-R^{j31}-CH=CH₂ to obtain an olefin containing compound (36).

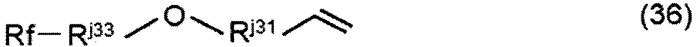

R^{j33} and R^{j31} are the same as defined above.

The reaction temperature and the solvent are the same as defined in Production Method 2.

### (Synthesis Method 3)

In the present method, hexafluorobenzene and an olefin compound (00) having a halogen atom: X-R^{j33}-OH (wherein X is a halogen atom, and preferably a chlorine atom, a bromine atom or an iodine atom) are used as raw materials to synthesize an olefin containing compound. Each sign is the same as defined above.

The present method includes the following step (I'). Hexafluorobenzene and the olefin compound having a halogen atom are allowed to react in the presence of Mg, thereby obtaining an olefin containing compound (36).

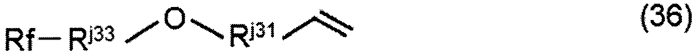

R^{j33} and R^{j31} are the same as defined above.

The reaction temperature and the solvent are the same as defined in Production Method 2.

### (Synthesis Method 4)

In the present method, a compound (31) having a group containing Rf- and a carbonyl group: Rf-R^{j33}-COOH is used as a raw material to synthesize a carbonyl group containing compound.

The present method includes the following step (I'). The compound (31) and a carbonyl group containing compound (001) having an amino group are allowed to react, thereby obtaining a carbonyl group containing compound (36).
Examples of the carbonyl group containing compound (001) include compounds having a carboxyl group, such as glycine, β-alanine, γ-aminobutyric acid, 5-aminovaleric acid, 6-aminocaproic acid, 7-aminoheptanoic acid, 8-aminooctanoic acid, 9-amino nonanoic acid, 10-aminodecanoic acid, 12-aminolauric acid, 14-aminomyristic acid, 16-amino-palmitic acid, 17-amino-margaric acid and 18-aminostearic acid, and methyl esters and acid chlorides thereof.

In the present method, 4-bromobenzenediazonium tetrafluoroborate is applied to 1,1,1-trifluoro-N,N-bis(trifluoromethyl)methanesulfonamide in the presence of rubidium fluoride to synthesize Br-Ph-N(CF₃)₂.

Next, the surface-treating agent of the present invention will now be described.

The surface-treating agent of the present disclosure contains at least one fluorine containing silane compound represented by the formula (1).

In one embodiment, the surface-treating agent of the present disclosure is at least one compound itself that is represented by the formula (1).

In one embodiment, the content of the compound represented by the formula (1) is preferably 0.1 to 50.0% by mass, more preferably 1.0 to 30.0% by mass, even more preferably 5.0 to 25.0% by mass, and particularly preferably 10.0 to 20.0% by mass based on the entirety of the surface-treating agent.

In another embodiment, the content of the compound represented by the formula (1) is preferably 0.001 to 30% by mass, more preferably 0.01 to 10% by mass, even more preferably 0.05 to 5% by mass, and particularly preferably 0.05 to 2% by mass based on the entirety of the surface-treating agent.

In one embodiment, the surface-treating agent of the present disclosure may contain a compound represented by the formula (1), and a condensed product in which at least part of the compound represented by the formula (1) is condensed.

In the above embodiment, the content of the condensed product may be preferably 40% by mass or less and more preferably 30% by mass or less based on the sum of the compound represented by the formula (1) and the condensed product. Here, the content of the condensed product can be determined from, for example, the abundance ratio of the peak position to the area in GPC (gel permeation chromatography).

The composition of the present disclosure may contain a solvent, a (non-reactive) silicone compound that may be understood as a silicone oil (hereinafter, referred to as "silicone oil"), an amine compound, an alcohol, a catalyst, a surfactant, a polymerization inhibitor, a sensitizer, and the like.

In one embodiment, the surface-treating agent of the present disclosure contains a compound represented by R⁹⁰-OH.

R⁹⁰ is a monovalent organic group, preferably a C₁₋₂₀ alkyl group or a C₃₋₂₀ alkylene group, and these groups are optionally substituted with one or more substituents. Examples of the substituents include a hydroxyl group and -OR⁹¹ (where R⁹¹ is a C₁₋₁₀ alkyl group, preferably a C₁₋₃ alkyl group, such as a methyl group).

In one embodiment, the surface-treating agent of the present disclosure may contain a solvent selected from compounds represented by R⁸¹OR⁸², R⁸3ₙ₈C₆H₆₋ₙ₈, R⁸⁴R⁸⁵R⁸⁶Si-(O-SiR⁸⁷R⁸⁸)ₘ₈-R⁸⁹, and (OSiR⁸⁷R⁸⁸)ₘ₉ wherein
R⁸¹ to R⁸⁹ are each independently a monovalent organic group having 1 to 10 carbon atoms,
m8 is an integer of 1 to 6,
m9 is an integer of 3 to 8, and
n8 is an integer of 0 to 6.

The monovalent organic group having 1 to 10 carbon atoms may be linear or may be branched, and may further contain a cyclic structure.

In one embodiment, the monovalent organic group having 1 to 10 carbon atoms may contain an oxygen atom, a nitrogen atom, or a halogen atom.

In another embodiment, the monovalent organic group having 1 to 10 carbon atoms does not contain a halogen atom.

In a preferred embodiment, the monovalent organic group having 1 to 10 carbon atoms is a hydrocarbon group optionally substituted with a halogen, and preferably a hydrocarbon group not substituted with a halogen.

In one embodiment, the hydrocarbon group is linear.

In another embodiment, the hydrocarbon group is branched.

In another embodiment, the hydrocarbon group contains a cyclic structure.

In one embodiment, the solvent is R⁸¹OR⁸².

R⁸¹ and R⁸² may be, each independently, preferably a hydrocarbon group having 1 to 8 carbon atoms, and more preferably a C₁₋₆ alkyl group or a C₅₋₈ cycloalkyl group.

In one embodiment, the solvent is R⁸³ₙ₈C₆H₆₋ₙ₈.

C₆H₆₋ₙ₈ is an n8-valent benzene ring. That is, R⁸³ₙ₈C₆H₆₋ₙ₈ is benzene substituted with n8 R⁸³ groups.

R⁸³ may be each independently a halogen, or a C₁₋₆ alkyl group optionally substituted with a halogen.

n8 is preferably an integer of 1 to 3.

In one embodiment, the solvent is R⁸⁴R⁸⁵R⁸⁶Si-(O-SiR⁸⁷R⁸⁸)ₘ₈-R⁸⁹.

In one embodiment, the solvent is (OSiR⁸⁷R⁸⁸)ₘ₉. (OSiR⁸⁷R⁸⁸)ₘ₉ is a cyclic siloxane formed by multiple OSiR⁸⁷R⁸⁸ units bonded in a cyclic form.

R⁸⁴ to R⁸⁹ are each independently a hydrogen atom or a C₁₋₆ alkyl group, preferably a C₁₋₆ alkyl group, more preferably a C₁₋₃ alkyl group, and still more preferably a methyl group.

m8 is preferably an integer of 1 to 6, more preferably an integer of 1 to 5, and still more preferably 1 to 2.

m9 is preferably an integer of 3 to 6, and more preferably an integer of 3 to 5.

In one embodiment, examples of the solvent include aliphatic hydrocarbons such as hexane, cyclohexane, heptane, octane, nonane, decane, undecane, dodecane, and mineral spirits; aromatic hydrocarbons such as benzene, toluene, xylene, naphthalene, and solvent naphtha; esters such as methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate; ketones such as acetone, methyl ethyl ketone, methyl isobutyl ketone, 2-hexanone, cyclohexanone, methyl amino ketone, and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and ethylene glycol monoalkyl ether; alcohols such as methanol, ethanol, iso-propanol, n-butanol, isobutanol, tert-butanol, sec-butanol, 3-pentanol, octyl alcohol, 3-methyl-3-methoxybutanol, and tert-amyl alcohol; glycols such as ethylene glycol and propylene glycol; cyclic ethers such as tetrahydrofuran, tetrahydropyran, and dioxane; amides such as N,N-dimethylformamide, N,N-dimethylacetamide, and N-methylpyrrolidone; ether alcohols such as methyl cellosolve, cellosolve, isopropyl cellosolve, butyl cellosolve, and diethylene glycol monomethyl ether; diethylene glycol monoethyl ether acetate; polyfluoroaromatic hydrocarbons (for example, 1,3-bis(trifluoromethyl)benzene); polyfluoroaliphatic hydrocarbons (for example, C₆F₁₃CH₂CH₃ (for example, ASAHIKLIN(R) AC-6000 manufactured by AGC Inc.), C₆F₁₃H (for example, ASAHIKLIN(R) AC-2000 manufactured by AGC Inc.), and 1,1,2,2,3,3,4-heptafluorocyclopentane (for example, Zeorolla(R) H manufactured by ZEON Corporation); fluorine containing hydrocarbons such as 1,1,2-trichloro-1,2,2-trifluoroethane, 1,2-dichloro-1,1,2,2-tetrafluoroethane, 1,1-dichloro-1,2,2,3,3-pentafluoropropane (HCFC 225), and 1,3-bis(trifluoromethyl)benzene; fluorine containing alcohols such as CF₃CH₂OH, CF₃CF₂CH₂OH, and (CF₃)₂CHOH; alkyl perfluoroalkyl ethers (the perfluoroalkyl group and the alkyl group may be linear or branched) such as hydrofluoroethers (HFE) (for example, perfluoropropyl methyl ether (C₃F₇OCH₃) (for example, Novec (TM) 7000 manufactured by SUMITOMO 3M), perfluorobutyl methyl ether (C₄F₉OCH₃) (for example, Novec (TM) 7100 manufactured by SUMITOMO 3M), perfluorobutyl ethyl ether (C₄F₉OC₂H₅) (for example, Novec(TM) 7200 manufactured by SUMITOMO 3M), and perfluorohexyl methyl ether (C₂F₅CF(OCH₃)C₃F₇) (for example, Novec(TM) 7300 manufactured by SUMITOMO 3M), or CF₃CH₂OCF₂CHF₂ (for example, ASAHIKLIN(R) AE-3000 manufactured by AGC Inc.)), hydrofluoroolefins; ethers such as CF₃CH=CHCl (for example, CELEFIN(R) 1233Z manufactured by Central Glass Co., Ltd.), CHF₂CF=CHCl (for example, AMOLEA(R) AS-300 manufactured by AGC Inc.), and cyclopentyl methyl ether; siloxanes such as hexamethyldisiloxane, hexaethyldisiloxane, octamethyltrisiloxane, octamethylcyclotetrasiloxane, octamethylcyclopentasiloxane, decamethylcyclopentasiloxane, decamethyltetrasiloxane, dodecamethylpentasiloxane, and tetradecamethylhexasiloxane; and dimethylsulfoxide. Alternatively, the solvent may be a mixed solvent of two or more of such solvents. In particular, preferable are aliphatic hydrocarbons, aromatic hydrocarbons, esters, glycol ethers, alcohols, ether alcohols, and siloxanes. For example, preferable are hexane, cyclohexane, heptane, octane, nonane, decane, undecane, dodecane, mineral spirits, benzene, toluene, xylene, naphthalene, methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl-2-hydroxybutylate, ethyl acetoacetate, amyl acetate, methyl lactate, ethyl lactate, methyl 3-methoxypropionate, ethyl 3-methoxypropionate, methyl 2-hydroxyisobutylate, ethyl 2-hydroxyisobutylate propylene glycol monomethyl ether, propylene glycol monoethyl ether, propylene glycol monobutyl ether, methanol, ethanol, iso-propanol, n-butanol, isobutanol, tert-butanol, sec-butanol, diethylene glycol monomethyl ether, hexamethyldisiloxane, hexaethyldisiloxane, octamethyltrisiloxane, decamethyltetrasiloxane, dodecamethylpentasiloxane, tetradecamethylhexasiloxane, octamethylcyclotetrasiloxane, and octamethylcyclopentasiloxane.

The silicone oil is not limited, and examples thereof include a compound represented by the following general formula (3a):

R^{1a}-(SiR³³₂-O)ₐ₁-SiR^{3a}₂-R^{1a} ... (3a)

wherein
R^{1a} is each independently a hydrogen atom or a hydrocarbon group,
R^{3a} is each independently a hydrogen atom or a hydrocarbon group, and
a1 is 2 to 3,000.

R^{3a} is each independently a hydrogen atom or a hydrocarbon group. Such a hydrocarbon group is optionally substituted.

R^{3a} is, each independently, preferably an unsubstituted hydrocarbon group or a hydrocarbon group substituted with a halogen atom. Such a halogen atom is preferably a fluorine atom.

R^{3a} is, each independently, preferably a C₁₋₆ alkyl group or aryl group optionally substituted with a halogen atom, and more preferably a C₁₋₆ alkyl group or aryl group.

The C₁₋₆ alkyl group may be linear or may be branched, and is preferably linear.
The C₁₋₆ alkyl group is preferably a C₁₋₃ alkyl group, and more preferably a methyl group.

The aryl group is preferably a phenyl group.

In one embodiment, R^{3a} is each independently a C₁₋₆ alkyl group, preferably a C₁₋₃ alkyl group, and more preferably a methyl group.

In another embodiment, R^{3a} is a phenyl group.

In another embodiment, R^{3a} is a methyl group or a phenyl group, and preferably a methyl group.

R^{1a} is each independently a hydrogen atom or a hydrocarbon group, and is the same as defined for R^{3a}.

R^{1a} is, each independently, preferably a C₁₋₆ alkyl group or aryl group optionally substituted with a halogen atom, and more preferably a C₁₋₆ alkyl group or aryl group.

In one embodiment, R^{1a} is each independently a C₁₋₆ alkyl group, preferably a C₁₋₃ alkyl group, and more preferably a methyl group.

In another embodiment, R^{1a} is a phenyl group.

In another embodiment, R^{1a} is a methyl group or a phenyl group, and preferably a methyl group.

a1 is 2 to 1,500. a1 may be preferably 5 or more, more preferably 10 or more, and even more preferably 15 or more, such as 30 or more or 50 or more. a1 may be preferably 1,000 or less, more preferably 500 or less, even more preferably 200 or less, and even more preferably 150 or less, such as 100 or less or 80 or less.

a1 may be preferably 5 to 1,000, more preferably 10 to 500, even more preferably 15 to 200, and even more preferably 15 to 150.

Examples of another silicone oil include a compound represented by the following (3b):

R^{1a}-R^{SO2}-R^{3a} ... (3b)

wherein
R^{1a} is each independently a hydrocarbon group,
R^{3a} is each independently a hydrocarbon group,
R^{SO2} is a divalent siloxane containing group, and has the same definition as described for the divalent siloxane containing group in X^{D} in the formula (1).

The silicone oil may have an average molecular weight of 500 to 1,000,000, and preferably 1,000 to 100,000. The molecular weight of the silicone oil may be measured using GPC.

As the silicone oil, a linear or cyclic silicone oil in which a1 in -(SiR^{3a}₂O)ₐ₁- is 30 or less can be used, for example. The linear silicone oil may be a so-called straight silicone oil or modified silicone oil. Examples of the straight silicone oil include dimethyl silicone oil, methyl phenyl silicone oil, and methyl hydrogen silicone oil. Examples of the modified silicone oil include those obtained by modifying a straight silicone oil with alkyl, aralkyl, polyether, higher fatty acid ester, fluoroalkyl, amino, epoxy, carboxyl, alcohol, or the like. Examples of the cyclic silicone oil include cyclic dimethylsiloxane oil.

The silicone oil may be contained in an amount of, for example, 0 to 50% by mass, preferably 0.001 to 30% by mass, and more preferably 0.1 to 5% by mass, based on the composition of the present disclosure.

In the composition of the present disclosure, such a silicone oil may be contained in an amount of, for example, 0 to 300 parts by mass, preferably 0 to 100 parts by mass, more preferably 0 to 50 parts by mass, and still more preferably 0 to 10 parts by mass, based on 100 parts by mass in total of the compound of the present disclosure (in the case of two or more types, the total thereof, and the same applies below).

The silicone oil contributes to improving the surface lubricity of the surface-treating layer.

Examples of the alcohol include methanol, ethanol, iso-propanol, n-butanol, isobutanol, tert-butanol, sec-butanol, 3-pentanol, octyl alcohol, 3-methyl-3-methoxybutanol, and tert-amyl alcohol. These alcohols added to the composition improves the stability of the composition.

Examples of the catalyst include acids (for example, acetic acid, hydrochloric acid, nitric acid, sulfuric acid, phosphoric acid, sulfonic acid, p-toluenesulfonic acid, trifluoroacetic acid, and the like), bases (for example, sodium hydroxide, potassium hydroxide, ammonia, triethylamine, diethylamine, and the like), transition metals (for example, Ti, Ni, Sn, Zr, Al, B, Si, Ta, Nb, Mo, W, Cr, Hf, V, and the like), and sulfur containing compounds or nitrogen containing compounds having an unshared electron pair in the molecular structure (for example, sulfoxide compounds, aliphatic amine compounds, aromatic amine compounds, phosphoric acid amide compounds, amide compounds, and urea compounds).

Examples of the aliphatic amine compounds may include diethylamine and triethylamine. Examples of the aromatic amine compounds may include aniline and pyridine.

In a preferred embodiment, the transition metal is contained as a transition metal compound represented by M-R, wherein M is a transition metal atom and R is a hydrolyzable group. By making the transition metal compound a compound in which a transition metal and a hydrolyzable group are bonded, the transition metal atom can be contained in the surface-treating layer more efficiently, and the friction durability and the chemical resistance of the surface-treating layer can be further improved.

The above hydrolyzable group means a group that can undergo a hydrolysis reaction in the same manner as the hydrolyzable group with respect to the above compound, that is, means a group that can be removed from the transition metal atom by a hydrolysis reaction. Examples of the hydrolyzable group include -OR^{m}, -OCOR^{m}, -O-N=CR^{m}₂, -NR^{m}₂, -NHR^{m}, -NCO, and a halogen (in these formulae, R^{m} represents a substituted or unsubstituted C₁₋₄ alkyl group).

In a preferred embodiment, the hydrolyzable group is -OR^{m}, and preferably methoxy or ethoxy. By using an alkoxy group as the hydrolyzable group, the transition metal atom can be contained in the surface-treating layer more efficiently, and the friction durability and the chemical resistance of the surface-treating layer can be further improved.

In one embodiment, the hydrolyzable group may be the same as the hydrolyzable group contained in the compound described above. By making the hydrolyzable groups in the compound and the transition metal compound the same group, even when such hydrolyzable groups are mutually exchanged, its effect can be minimized.

In another embodiment, the above hydrolyzable group may be different from the hydrolyzable group contained in the compound described above. By making the hydrolyzable groups in the above compound and the transition metal compound different, the reactivity of hydrolysis can be controlled.

In one embodiment, the above hydrolyzable group and the hydrolyzable group contained in the compound described above may be mutually interchanged in the composition.

In a preferred embodiment, the transition metal compound may be Ta(OR^{m})₅ (wherein R^{m} is a substituted or unsubstituted C₁₋₄ alkyl group), preferably Ta(OCH₂CH₃)₅ or Si(OR^{m})₁₋ₘ₁R^{m'}ₘ₁ (wherein R^{m} is a substituted or unsubstituted C₁₋₄ alkyl group, R^{m'} is a C₁₋₄ alkyl group, and m1 is 0 or 1), and preferably tetraethoxysilane, methyltrimethoxysilane, methyltriethoxysilane, tetraisopropoxysilane, dimethyldiethoxysilane, or dimethyldimethoxysilane.

The catalyst may be contained in an amount of, for example, 0.0002% by mass or more based on the entirety of the composition. The catalyst may be contained in an amount of preferably 0.02% by mass or more, and more preferably 0.04% by mass or more, based on the entirety of the composition. The catalyst may be contained in an amount of, for example, 10% by mass or less based on the entirety of the composition, and in particular, it is contained in an amount of 1% by mass or less. The composition of the present disclosure can contribute to the formation of a surface-treating layer with better durability when the catalyst is contained in the concentration as described above.

The content of the catalyst is preferably 0 to 10% by mass, more preferably 0 to 5% by mass, and particularly preferably 0 to 1% by mass, based on the compound of the present disclosure.

The catalyst promotes hydrolysis and dehydrative condensation of the compound of the present disclosure, and promotes formation of a layer formed of the composition of the present disclosure.

Examples of other components include, in addition to those described above, tetraethoxysilane, methyltrimethoxysilane, 3-aminopropyltrimethoxysilane, 3-glycidoxypropyltrimethoxysilane, and methyltriacetoxysilane.

The composition of the present disclosure may contain, in addition to the components described above, trace amounts of Pt, Rh, Ru, 1,3-divinyltetramethyldisiloxane, triphenylphosphine, NaCl, KCl, silane condensation product, and the like as impurities.

In one embodiment, the composition of the present disclosure is for a dry coating method, and preferably for vacuum deposition.

In one embodiment, the composition of the present disclosure is for a wet coating method, and preferably for dip coating.

The composition of the present disclosure can be formed into pellets by impregnating a porous material such as a porous ceramic material or a metal fiber such as a fiber obtained by, for example, solidifying steel wool in a cotton-like form therewith. Such pellets can be used in, for example, vacuum deposition.

The composition of the present disclosure is preferably used as a surface-treating agent or as a component of a surface-treating agent.

Hereinafter, the article of the present disclosure will be described.

The article of the present disclosure includes a substrate and a layer (surface-treating layer) on the substrate surface, the layer being formed of the surface-treating agent of the present disclosure.

The substrate usable in the present disclosure may be composed of any suitable material such as glass, resin (which may be natural or synthetic resin such as a commonly used plastic material), metal, ceramics, semiconductors (such as silicon and germanium), fiber (such as woven fabric and nonwoven fabric), fur, leather, wood, pottery, stone, building materials, and sanitary articles.

For example, when the article to be produced is an optical member, the material constituting the surface of the substrate may be a material for an optical member, such as glass or a transparent plastic. When the article to be produced is an optical member, some layer (or film), such as a hard coat layer or an antireflection layer, may be formed on the surface (the outermost layer) of the substrate. The antireflection layer may be any of a single-layer antireflection layer and a multi-layer antireflection layer. Examples of inorganic substances usable in the antireflection layer include SiO₂, SiO, ZrO₂, TiO₂, TiO, Ti₂O₃, Ti₂O₅, Al₂O₃, Ta₂O₅, Ta₃O₅, Nb₂O₅, HfO₂, Si₃N₄, CeO₂, MgO, Y₂O₃, SnO₂, MgF₂, and WO₃. One of these inorganic substances may be used singly, or two or more types thereof may be used in combination (for example, as a mixture). In the case of a multi-layer antireflection layer, it is preferable to use SiO₂ and/or SiO for the outermost layer thereof. When the article to be produced is an optical glass component for a touch panel, a part of the surface of the substrate (glass) may have a transparent electrode such as a thin film in which indium tin oxide (ITO), indium zinc oxide, or the like is used. The substrate, according to its specific configuration or the like, may have an insulating layer, an adhesive layer, a protecting layer, a decorated frame layer (I-CON), an atomizing film layer, a hard coating layer, a polarizing film, a phase difference film, a liquid crystal display module, or the like.

The shape of the substrate is not limited, and may be, for example, in the form of a plate, a film, or the like. The surface region of the substrate on which a surface-treating layer is to be formed may be at least a portion of the substrate surface, and may be suitably determined according to the application, specific configuration, and the like of an article to be produced.

In one embodiment, the substrate, or at least the surface portion thereof, may be composed of a material originally having a hydroxyl group. Examples of the material include glass, as well as metal (in particular, base metal) where a natural oxidized film or a thermal oxidized film is formed on the surface, ceramics, and semiconductors. Alternatively, when the substrate has an insufficient amount of hydroxyl groups or when the substrate originally has no hydroxyl group as in resin and the like, a pre-treatment may be performed on the substrate to thereby introduce or increase hydroxyl groups on the surface of the substrate. Examples of such a pre-treatment include a plasma treatment (for example, corona discharge) and ion beam irradiation. The plasma treatment can be suitably utilized to not only introduce or increase hydroxyl groups on the substrate surface, but also clean the substrate surface (remove foreign matter and the like). Another example of such a pre-treatment is a method wherein a monolayer of a surface adsorbent having a carbon-carbon unsaturated bonding group is formed on the surface of the substrate by a LB method (a Langmuir-Blodgett method), a chemical adsorption method, or the like beforehand, and thereafter cleaving the unsaturated bond under an atmosphere containing oxygen, nitrogen, or the like.

In another embodiment, the substrate, or at least the surface portion thereof, may be composed of a material comprising another reactive group such as a silicone compound having one or more Si-H groups or alkoxysilane.

In a preferred embodiment, the substrate is glass. As the glass, sapphire glass, soda-lime glass, alkali aluminosilicate glass, borosilicate glass, alkali-free glass, crystal glass, quartz glass, and crystallized glass are preferred, and chemically tempered soda-lime glass, chemically tempered alkali aluminosilicate glass, and chemically bonded borosilicate glass are particularly preferred.

In one embodiment, the article of the present disclosure may include a silicon oxide containing intermediate layer between the glass and the surface-treating layer. By providing such an intermediate layer, the adhesion between the glass and the surface-treating layer is improved, and the durability is improved.

In a preferred embodiment, the intermediate layer may contain an alkali metal in addition to silicon oxide.

Examples of the alkali metal include lithium, sodium, and potassium. The alkali metal is preferably sodium.

The thickness of the intermediate layer is not limited, and it is preferably 1 to 200 nm, and particularly preferably 1 to 20 nm. By setting the thickness of the intermediate layer to the lower limit value of the above range or more, the improvement effect of adhesion by the intermediate layer becomes greater.

The concentration of alkali metal atoms in the intermediate layer can be measured by various surface analysis apparatuses such as TOF-SIMS, XPS, and XRF.

The proportion of alkali metal atoms in all atoms of the entire intermediate layer can be obtained by XPS depth profile analysis by ion sputtering, which is performed by alternately repeating XPS measurements and etching of the surface by ion sputtering using an ion gun built into the XPS device.

In the intermediate layer, the average value of the concentration of alkali metal in the area with a depth of 1 nm or less from the surface in contact with the surface-treating layer is determined by obtaining the depth profile of the concentration of alkali metal atoms by TOF-SIMS (time-of-flight secondary ion mass spectrometry) depth profile analysis by ion sputtering, and then calculating the average value of the concentration of alkali metal atoms in the profile. The TOF-SIMS depth profile analysis by ion sputtering is performed by alternately repeating TOF-SIMS measurements and etching of the surface by ion sputtering using an ion gun built into the TOF-SIMS device.

The article of the present disclosure can be produced by forming a layer of the surface-treating agent of the present disclosure on the surface of the substrate and post-treating this layer as necessary, thereby forming a layer from the surface-treating agent of the present disclosure.

The layer of the surface-treating agent of the present disclosure can be formed by applying the surface-treating agent on the surface of the substrate such that the surface-treating agent coats the surface. The coating method is not limited. For example, a wet coating method and a dry coating method can be used.

Examples of the wet coating method include dip coating, spin coating, flow coating, spray coating, roll coating, gravure coating, wipe coating, squeegee coat method, die coat, inkjet, cast method, Langmuir-Blodgett method, and similar methods.

Examples of the dry coating method include deposition (usually, vacuum deposition), sputtering, CVD, and similar methods. Specific examples of the deposition method (usually, a vacuum deposition method) include resistive heating, high-frequency heating using electron beam, microwave, or the like, ion beam, and similar methods. Specific examples of the CVD method include plasma-CVD, optical CVD, thermal CVD, and similar methods.

Furthermore, coating by an atmospheric pressure plasma method can be performed.

When using the wet coating method, the surface-treating agent of the present disclosure can be applied to the substrate surface after being diluted with a solvent. From the viewpoint of the stability of the composition of the present disclosure and the volatility of the solvent, the following solvents are preferably used: aliphatic hydrocarbons such as hexane, cyclohexane, heptane, octane, nonane, decane, undecane, dodecane, and mineral spirits; aromatic hydrocarbons such as benzene, toluene, xylene, naphthalene, and solvent naphtha; esters such as methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate; ketones such as acetone, methyl ethyl ketone, methyl isobutyl ketone, 2-hexanone, cyclohexanone, methyl amino ketone, and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and ethylene glycol monoalkyl ether; alcohols such as methanol, ethanol, iso-propanol, n-butanol, isobutanol, tert-butanol, sec-butanol, 3-pentanol, octyl alcohol, 3-methyl-3-methoxybutanol, and tert-amyl alcohol; glycols such as ethylene glycol and propylene glycol; cyclic ethers such as tetrahydrofuran, tetrahydropyran, and dioxane; amides such as N,N-dimethylformamide, N,N-dimethylacetamide, and N-methylpyrrolidone; ether alcohols such as methyl cellosolve, cellosolve, isopropyl cellosolve, butyl cellosolve, and diethylene glycol monomethyl ether; diethylene glycol monoethyl ether acetate; polyfluoroaromatic hydrocarbons (for example, 1,3-bis(trifluoromethyl)benzene); polyfluoroaliphatic hydrocarbons (for example, C₆F₁₃CH₂CH₃ (for example, ASAHIKLIN(R) AC-6000 manufactured by AGC Inc.), C₆F₁₃H (for example, ASAHIKLIN(R) AC-2000 manufactured by AGC Inc.), and 1,1,2,2,3,3,4-heptafluorocyclopentane (for example, Zeorolla(R) H manufactured by ZEON Corporation); fluorine containing hydrocarbons such as 1,1,2-trichloro-1,2,2-trifluoroethane, 1,2-dichloro-1,1,2,2-tetrafluoroethane, 1,1-dichloro-1,2,2,3,3-pentafluoropropane (HCFC 225), and 1,3-bis(trifluoromethyl)benzene; fluorine containing alcohols such as CF₃CH₂OH, CF₃CF₂CH₂OH, and (CF₃)₂CHOH; alkyl perfluoroalkyl ethers (the perfluoroalkyl group and the alkyl group may be linear or branched) such as hydrofluoroethers (HFE) (for example, perfluoropropyl methyl ether (C₃F₇OCH₃) (for example, Novec(TM) 7000 manufactured by SUMITOMO 3M), perfluorobutyl methyl ether (C₄F₉OCH₃) (for example, Novec (TM) 7100 manufactured by SUMITOMO 3M), perfluorobutyl ethyl ether (C₄F₉OC₂H₅) (for example, Novec(TM) 7200 manufactured by SUMITOMO 3M), and perfluorohexyl methyl ether (C₂F₅CF(OCH₃)C₃F₇) (for example, Novec(TM) 7300 manufactured by SUMITOMO 3M), or CF₃CH₂OCF₂CHF₂ (for example, ASAHIKLIN(R) AE-3000 manufactured by AGC Inc.)), hydrofluoroolefins; ethers such as CF₃CH=CHCl (for example, CELEFIN(R) 1233Z manufactured by Central Glass Co., Ltd.), CHF₂CF=CHCl (for example, AMOLEA(R) AS-300 manufactured by AGC Inc.), and cyclopentyl methyl ether; siloxanes such as hexamethyldisiloxane, hexaethyldisiloxane, octamethyltrisiloxane, octamethylcyclotetrasiloxane, octamethylcyclopentasiloxane, decamethylcyclopentasiloxane, decamethyltetrasiloxane, dodecamethylpentasiloxane, and tetradecamethylhexasiloxane; and dimethylsulfoxide. Alternatively, the solvent may be a mixed solvent of two or more of such solvents. In particular, preferable are aliphatic hydrocarbons, aromatic hydrocarbons, esters, glycol ethers, alcohols, ether alcohols, and siloxanes. For example, preferable are hexane, cyclohexane, heptane, octane, nonane, decane, undecane, dodecane, mineral spirits, benzene, toluene, xylene, naphthalene, methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl-2-hydroxybutylate, ethyl acetoacetate, amyl acetate, methyl lactate, ethyl lactate, methyl 3-methoxypropionate, ethyl 3-methoxypropionate, methyl 2-hydroxyisobutylate, ethyl 2-hydroxyisobutylate propylene glycol monomethyl ether, propylene glycol monoethyl ether, propylene glycol monobutyl ether, methanol, ethanol, iso-propanol, n-butanol, isobutanol, tert-butanol, sec-butanol, diethylene glycol monomethyl ether, hexamethyldisiloxane, hexaethyldisiloxane, octamethyltrisiloxane, decamethyltetrasiloxane, dodecamethylpentasiloxane, tetradecamethylhexasiloxane, octamethylcyclotetrasiloxane, and octamethylcyclopentasiloxane.

In one embodiment, as the solvent when the wet coating method is used, a compound represented by R⁹⁰-OH can be used, for example. R⁹⁰ is a monovalent organic group, preferably a C₁₋₂₀ alkyl group or a C₃₋₂₀ alkylene group, and these groups are optionally substituted with one or more substituents. Examples of substituents may include a hydroxyl group and -OR⁹¹ (where R⁹¹ is a C₁₋₁₀ alkyl group, preferably a C₁₋₃ alkyl group, such as a methyl group).

When using the dry coating method, the surface-treating agent of the present disclosure may be directly subjected to the dry coating method, or may be diluted with the solvent before being subjected to the dry coating method.

A layer of the surface-treating agent is preferably formed such that the surface-treating agent of the present disclosure coexists in the layer with a catalyst for hydrolysis and dehydration condensation. Conveniently, in the case of a wet coating method, the surface-treating agent of the present disclosure is diluted with a solvent, and then, immediately before application to the substrate surface, a catalyst may be added to the diluted solution of the surface-treating agent of the present disclosure. In the case of a dry coating method, the surface-treating agent of the present disclosure to which a catalyst has been added is directly used to a deposition (usually vacuum deposition) treatment, or a pellet-like material may be used to a deposition (usually vacuum deposition) treatment, wherein the pellets are obtained by impregnating a porous body of metal such as iron or copper with the surface-treating agent of the present disclosure to which the catalyst has been added.

As the catalyst, any appropriate acids or bases, transition metals (such as Ti, Ni, Sn, Zr, Al, or B), sulfur containing compounds or nitrogen containing compounds having an unshared electron pair in the molecular structure (such as sulfoxide compounds, aliphatic amine compounds, aromatic amine compounds, phosphoric acid amide compounds, amide compounds, and urea compounds), and the like can be used. As the acid catalyst, for example, acetic acid, formic acid, trifluoroacetic acid, hydrochloric acid, nitric acid, sulfuric acid, phosphoric acid, sulfonic acid, methanesulfonic acid, or p-toluenesulfonic acid, and the like can be used. Also, as the base catalyst, for example, ammonia, sodium hydroxide, potassium hydroxide, organic amines such as triethylamine and diethylamine, and the like can be used. Examples of the transition metals, aliphatic amine compounds, and aromatic amine compounds include the same as those described above.

The surface-treating layer contained in the article of the present disclosure may have high abrasion durability. In addition, the surface-treating layer may have not only high abrasion durability, but also have, depending on the compositional features of the surface-treating agent used, water-repellency, oil-repellency, antifouling property (for example, preventing fouling such as fingerprints from adhering), waterproof property (preventing water from penetrating into electronic components and the like), surface lubricity (or lubricity, for example, such as removability of fouling including fingerprints by wiping and the like and excellent tactile sensations to the fingers), chemical resistance, and the like, and may be suitably used as a functional thin film.

Therefore, the present disclosure further relates to an optical material having the surface-treating layer in the outermost layer.

The optical material preferably includes a wide variety of optical materials, in addition to optical materials relating to displays and the like as exemplified below: for example, displays such as cathode ray tubes (CRTs; for example, PC monitors), liquid crystal displays, plasma displays, organic EL displays, inorganic thin-film EL dot matrix displays, rear projection displays, vacuum fluorescent displays (VFDs), field emission displays (FEDs); protective plates for such displays; and those obtained by performing an antireflection film treatment on their surfaces.

The article of the present disclosure may be, but is not limited to, an optical member. Examples of the optical member include lenses of glasses or the like; front surface protective plates, antireflection plates, polarizing plates, and anti-glare plates for displays such as PDPs and LCDs; touch panel sheets for equipment such as cell phones and portable information terminals; disc surfaces of optical discs such as Blu-ray (R) discs, DVD discs, CD-Rs, and MOs; optical fibers; and display surfaces of watches and clocks.

The article of the present disclosure may be medical equipment or a medical material. The article having a layer that is obtained according to the present disclosure may be an automobile interior or exterior member. Examples of the exterior material are as follows: windows, light covers, and external camera covers. Examples of the interior material include the following: instrument panel covers, navigation system touch panels, and decorative interior materials.

The thickness of the layer is not limited. The thickness of the layer in the case of an optical member may be in the range of, for example, 1 to 50 nm, preferably 1 to 30 nm, and more preferably 1 to 15 nm, from the viewpoint of optical performance, abrasion durability, and antifouling property.

The apparatus for performing X-ray photoelectron spectroscopy for measuring the atomic composition and the ratio of constitutional atoms of the surface-treating layer may be XPS or PHI 5000 VersaProbe II manufactured by ULVAC-PHI, Inc. Usable measurement conditions for XPS analysis may be an X-ray source of 25 W monochromatic AlKα radiation, a photoelectron detection surface of 1,400 µm × 300 µm, a photoelectron detection angle in a range of 20° to 90° (for example, 20°, 45°, 90°), a pass energy of 23.5 eV, and sputtering with a gas cluster ion beam or Ar ions. The compositions of the surface-treating layer and the intermediate layer can be determined by observing the peak areas of C1s, O1s, and Si2p under the above apparatus and measurement conditions, and calculating the atomic ratio of carbon, oxygen, and silicon.

Also, depth profile analysis may be performed as well. Usable measurement conditions for XPS analysis may be an X-ray source of 25 W monochromatic AlKα radiation, a photoelectron detection surface of 1,400 µm × 300 µm, a photoelectron detection angle in a range of 20° to 90° (for example, 20°, 45°, 90°), a pass energy of 23.5 eV, and Ar ions, gas cluster ions, C60 ions, or the like as sputtering ions. Etching may be performed to 1 to 100 nm by sputtering, and the composition in the coating film at each etching depth may be obtained as well.

By adjusting the photoelectron detection angle of the XPS analysis, the detection depth can be suitably adjusted. For example, a shallow angle close to 20° allows a detection depth of about 3 nm, while a deep angle close to 90° allows a detection depth of about 10 and several nanometers.

The silicon oxide containing intermediate layer described above can be formed by applying a silicon oxide precursor to the substrate surface. When the intermediate layer contains an alkali metal, the intermediate layer can be formed by applying a composition containing a silicon oxide precursor and an alkali metal source to the substrate surface.

Examples of the silicon oxide precursor include silicic acid, a partial condensed product of silicic acid, an alkali metal silicate, a silane compound having a hydrolyzable group that is bonded to a silicon atom, and a partially hydrolyzed condensed product of such a silane compound. Silicic acid and a partial condensed product thereof can be converted to silicon oxide by dehydrative condensation, and an alkali metal silicate can be converted to silicon oxide by being converted first to silicic acid or a partial condensed product thereof with an acid or a cation exchange resin and then dehydratively condensing the resulting silicic acid or partial condensed product thereof. Examples of the hydrolyzable group in the silane compound having a hydrolyzable group that is bonded to a silicon atom include an alkoxy group and a chlorine atom. The hydrolyzable group of the silane compound can be hydrolyzed to give a hydroxyl group, and the resulting silanol compound can be dehydratively condensed to give silicon oxide. Examples of the silane compound having a hydrolyzable group that is bonded to a silicon atom include alkoxysilanes such as tetraalkoxysilane and alkyltrialkoxysilane, and tetrachlorosilane.

The alkali metal source includes alkali metal hydroxides, water-soluble alkali metal salts, and the like. Examples of the water-soluble alkali metal salts include alkali metal carbonates, alkali metal hydrogen carbonates, alkali metal hydrochlorides, and alkali metal nitrates. The alkali metal source is preferably an alkali metal hydroxide and an alkali metal carbonate.

Note that the alkali metal silicate can be used as a silicon oxide precursor and an alkali metal source. The alkali metal silicate can be converted to silicon oxide via silicic acid, and in this process, a small amount of alkali metal may remain in the produced silicon oxide. Accordingly, regulating the amount of the remaining alkali metal enables silicon oxide containing a predetermined amount of alkali metal atoms to be obtained.

The thickness of the intermediate layer is not limited, and is in the range of, for example, 1 to 50 nm, preferably 1 to 30 nm, more preferably 2 to 15 nm, and even more preferably 3 to 10 nm.

So far, the compound, the composition, and the article of the present disclosure have been described in detail. The compound, the composition, the article, and the like of the present disclosure are not limited to those exemplified above.

### Examples

Hereinafter, the present disclosure will now be described by way of Examples, but the present disclosure is not limited to the following Examples.

### (Synthetic Example 1)

Magnesium (0.448 g), iodine (small amount), tetrahydrofuran (15 mL) and 18-bromo-1-octadecene (5.0 g) were added, and the mixture was stirred at 60°C for 2 hours. To another flask container were added hexafluorobenzene (5.64 g) and tetrahydrofuran (15 mL), and the mixture was stirred at 60°C, and the solution prepared as described above was added dropwise thereto. The mixture was allowed to react at 60°C for 48 hours, and purification was then performed, thereby obtaining the following Compound (1), C₆F₅(CH₂)₁₆CH=CH₂ (3.27 g), which has a pentafluorophenyl group at an end.

¹H NMR (CDCl₃, 400 MHz) δ [ppm]: 0.827-0.919 (t), 1.256-1.406 (m), 2.013-2.066 (q), 2.660-2.697 (t), 4.911-5.020 (m), 5.765-5.866 (m)

### (Synthetic Example 2)

C₆F₅(CH₂)₁₆CH=CH₂ (1.5 g) which is Compound (1) obtained in Synthetic Example 1, toluene (15.5 g), pyridine (0.163 g), and a xylene solution (0.82 mL) containing a Pt complex of 1,3-divinyl-1,1,3,3-tetramethyldisiloxane at 2% were each added, trimethoxysilane (1.4 mL) was then added, and the mixture was stirred at room temperature overnight. Thereafter, purification was performed, thereby obtaining the following Compound (2), C₆F₅(CH₂)₁₈Si(OCH₃)₃ (2.29 g), which has a trimethoxysilyl group at an end.

¹H NMR (CDCl₃, 400 MHz) δ [ppm]: 0.010-0.132 (m), 0.606-0.657 (m), 0.852-0.886 (m), 1.242-1.417 (m), 3.535-3.613 (m)

### (Synthetic Example 3)

First, 12-aminolauric acid (10.26 g), toluene (139 mL) and methanol (93 mL) were added, and trimethylsilyldiazomethane (0.6 mol/L hexane solution, 93 mL) was added dropwise with stirring at 65°C. The mixture was stirred at 65°C for 1 hour, concentrated, and purified to obtain the following Compound (3), H₂N(CH₂)₁₁COOMe (11.03 g).

¹H NMR (CDCl₃, 400 MHz) δ [ppm]: 1.204-1.263 (m), 1.379-1.432 (m), 1.565-1.638 (m), 1.268-2.306 (t), 2.629-2.678 (t), 3.651 (s)

### (Synthetic Example 4)

Compound (3) (10.17 g) obtained in Synthetic Example 3, pentafluorobenzoic acid (12.17 g), dichloromethane (218 mL), 1-(3-dimethylaminopropyl)-3-ethylcarbodiimide hydrochloride (12.5 g) and 4-dimethylaminopyridine (0.27 g) were each added, and then stirred at 40°C for 6 hours. Thereafter, purification was performed, thereby obtaining the following Compound (4), C₆F₅CONH(CH₂)₁₁COOCH₃ (15.52 g).

¹H NMR (CDCl₃, 400 MHz) δ [ppm]: 1.194-1.403 (m), 1.542-1.595 (m), 2.254-2.292 (t), 3.397-3.447 (q), 3.653 (s), 6.13 (bs)

### (Synthetic Example 5)

Compound (4) (2.20 g) obtained in Synthetic Example 4, 1,2-dichloroethane (28 mL) and trimethyltin hydroxide (2.89 g) were each added, and the mixture was stirred at 80°C for 48 hours. Thereafter, purification was performed, thereby obtaining the following Compound (5), C₆F₅CONH(CH₂)₁₁COOCH (1.858 g).

¹H NMR (CDCl₃, 400 MHz) δ [ppm]: 1.250-1.425 (m), 1.569-1.664 (m), 2.325-2.376 (t), 3.434-3.484 (q), 5.96 (bs)

### (Synthetic Example 6)

Compound (5) (0.874 g) obtained in Synthetic Example 5, dichloromethane (22 mL), 1-(3-dimethylaminopropyl)-3-ethylcarbodiimide hydrochloride (0.942 g), 4-dimethylaminopyridine (0.023 g) and diallylamine (0.54 mL) were each added, and the mixture was stirred at room temperature overnight. Thereafter, purification was performed, thereby obtaining the following Compound (6), C₆F₅CONH(CH₂)₁₁CON(CH₂CH=CH₂) (20.74 g).

¹H NMR (CDCl₃, 400 MHz) δ [ppm]: 1.177-1.315 (m), 1.552-1.605 (m), 2.244-2.282 (t), 3.400-3.449 (q), 3.841-3.932 (m), 5.059-5.203 (m), 5.656-5.790 (m), 6.560 (bs)

### (Synthetic Example 7)

Compound (6) (0.874 g) obtained in Synthetic Example 6, toluene (8.0 mL), pyridine (0.0703 g), and a xylene solution (0.35 mL) containing a Pt complex of 1,3-divinyl-1,1,3,3-tetramethyldisiloxane at 2% were each added, trimethoxysilane (0.8 mL) was then added, and the mixture was stirred at room temperature overnight. Thereafter, purification was performed, thereby obtaining the following Compound (7), C₆F₅CONH(CH₂)₁₁CON(CH₂CH₂CH₂Si(OCH₃)₃)₂ (1.22 g), which has a trimethoxysilyl group at an end.

¹H NMR (CDCl₃, 400 MHz) δ [ppm]: 0.546-0.585 (m), 0.964-1.113 (m), 1.629-2.083 (m), 2.700-2.767 (m), 3.946-4.016 (m)

### (Comparative Compound)

The following Compound (A) was used.

### - Compound (A): Octadecyltrimethoxysilane manufactured by Tokyo Chemical Industry Co., Ltd.

### (Examples 1 and 2, Comparative Example 1)

### <Na containing Intermediate Layer-Forming Material>

2.2 g of sodium hydroxide (manufactured by FUJIFILM Wako Pure Chemical Corporation) was dissolved in 24 g of distilled water to obtain an 8.4 mass% aqueous sodium hydroxide solution. Then, 24 g of this 8.4% by mass aqueous sodium hydroxide solution and 20 g of MS gel (M.S. GEL D-100-60A (manufactured by AGC Si-Tech Co., Ltd.)) were mixed so that the aqueous sodium hydroxide solution was absorbed into the MS gel. The MS gel that had absorbed the aqueous sodium hydroxide solution was dried at 25°C for 8 hours, then molded with a tableting machine (4 MPa for 1 minute), and fired at 1,000°C for 1 hour to give a formed article 1 (pellets).

### <Formation of Surface-Treating Layer>

Surface-treating agents were synthesized by combining solvents and compounds as shown in Table 1 below. The compound concentration was set to 20 wt%. In the table below, EtOH represents ethanol.

**[Table 1]**

| Example/Comparative Example No. | Solvent | Compound No. |
|---|---|---|
| Example 1 | EtOH | Compound (2) |
| Example 2 | EtOH | Compound (7) |
| Comparative Example 1 | EtOH | Compound (A) |

The surface-treating agents were vacuum-deposited on a chemically tempered glass ("Gorilla" glass, manufactured by Corning Incorporated, thickness of 0.7 mm). Specifically, a molybdenum boat in the vacuum deposition device was filled with 0.1 g of the surface-treating agent, and the vacuum deposition device was evacuated to a pressure of 3.0 × 10⁻³ Pa or lower. Thereafter, a silicon dioxide film with a thickness of 7 nm was formed, followed by heating the boat by the resistance heating scheme to form a surface-treating layer. Thereafter, a heating treatment was performed in an oven at 150°C for 30 minutes to obtain a surface-treating layer.

### (Examples 3 and 4, Comparative Example 2)

Surface-treating agents were synthesized by combining solvents and compounds as shown in Table 2 below. The compound concentration was set to 20 wt%.

**[Table 2]**

| Example/Comparative Example No. | Solvent | Compound No. |
|---|---|---|
| Example 3 | EtOH | Compound (2) |
| Example 4 | EtOH | Compound (7) |
| Comparative Example 2 | EtOH | Compound (A) |

The surface-treating agents were vacuum-deposited on a chemically tempered glass ("Gorilla" glass, manufactured by Corning Incorporated, thickness of 0.7 mm). Specifically, a molybdenum boat in the vacuum deposition device was filled with 0.1 g of the surface-treating agent, and the vacuum deposition device was evacuated to a pressure of 3.0 × 10⁻³ Pa or lower. Thereafter, a layer with a thickness of 7 nm was formed by an electron beam deposition scheme, followed by heating the boat by the resistance heating scheme. Thereafter, a heating treatment was performed in an oven at 150°C for 30 minutes to obtain a surface-treating layer.

### <Evaluation>

### [Evaluation of Fingerprint Removability by Wiping]

For the surface-treating layers formed as described above, fingerprint removability by wiping was evaluated according to the following procedures.

Haze (%) is used as an index for fingerprint removability by wiping. Lower haze indicates that fingerprints are less visible. For the haze measurement, a haze meter NDH 7000SP manufactured by NIPPON DENSHOKU INDUSTRIES CO., LTD. was used. The substrate was placed such that the entire artificial fingerprint stamp region fell within the measurement region (Φ20 mm), and the average value of three measurements was used.

### (Initial Evaluation)

After the surface-treating layer was formed, the excess on the surface was wiped off with ethanol, and then haze was measured. This was defined as Ti.

### (Evaluation before Removal by Wiping)

An artificial fingerprint solution was stamped on the surface-treating layer after the initial evaluation, and the haze of the stamped section was measured. This was defined as T0.

Note that the compositional features of the artificial fingerprint solution and the stamping conditions are shown below.

### (Method for Preparing Artificial Fingerprint Solution)

The preparation of the artificial fingerprint solution was performed as follows, referring to JP 2006-120317 A.

1.6 g of KANTO (Japanese) loam (JIS Test Powders 1 (Class 11), The Association of Powder Process Industry and Engineering, Japan) and 32 g of methoxypropanol (manufactured by Tokyo Chemical Industry Co., Ltd.) were mixed. In addition, 4 g of triolein (manufactured by Tokyo Chemical Industry Co., Ltd.) was added and the mixture was stirred.

### (Method for Preparing Artificial Fingerprint Sheet)

A glass plate ("Gorilla" glass, manufactured by Corning Incorporated, thickness of 0.7 mm) was UV cleaned for 10 minutes. The glass plate was spin-coated (5,000 rpm for 10 seconds) with 1.1 mL of the artificial fingerprint solution prepared as described above. Thereafter, the glass was heated in a drying oven at 60°C for 3 minutes.

### (Stamping Conditions)

### Stamp: silicone rubber (stamping surface Φ16 mm)

The stamp was pressed onto the artificial fingerprint sheet prepared as described above with a load of 5 kgw for 10 seconds to transfer the artificial fingerprint. The stamp on which the artificial fingerprint had been transferred was pressed against a sample for evaluating removability by wiping with a load of 5 kgw for 10 seconds to allow the artificial fingerprint solution to adhere to the sample.

### (Evaluation after Removal by Wiping)

For the formed surface-treating layer, a rubbing tester (manufactured by Imoto machinery Co., LTD) was used to perform a wiping operation 10 times under the following conditions.

### - Wiping method:

Friction block: BEMCOT M-3II (product name, manufactured by Asahi Kasei Corp.)
Moving distance (one way): 60 mm
Moving speed: 8,400 mm/min
Load: 1,000 g/3 cm²

The criteria for evaluation of fingerprint adherability and fingerprint removability by wiping are as follows.

### (Evaluation before Removal by Wiping)

Value of T0 - Ti:
Less than 5: excellent (circle)
5 or more and less than 10: good (triangle)
10 or more: fair (cross mark)

### (Evaluation after Removal by Wiping)

Value of T10 - Ti:
Less than 1: excellent (circle)
1 or more and less than 2.5: good (triangle)
2.5 or more: fair (cross mark)

Table 3 and Table 4 below show the evaluation results of and fingerprint removability by wiping, as well as the evaluation results of abrasion resistance.

**[Table 3]**

| Example/Comparative Example No. | Evaluation before removal by wiping T0-Ti | Evaluation after removal by wiping T10-Ti |
|---|---|---|
| Example 1 | ○ | ○ |
| Example 2 | ○ | ○ |
| Comparative Example 1 | × | × |

**[Table 4]**

| Example/Comparative Example No. | Evaluation before removal by wiping T0-Ti | Evaluation after removal by wiping T10-Ti |
|---|---|---|
| Example 3 | ○ | ○ |
| Example 4 | ○ | ○ |
| Comparative Example 2 | × | × |

### Industrial Applicability

The fluorine containing silane compound of the present disclosure can be suitably utilized in a variety of diverse applications.

## Claims

1. A fluorine containing silane compound represented by the following formula (1):
**Rf_{α1}-X^{A}-R^{Si}_{β1}** **(1)**
wherein
Rf is an aromatic group substituted with a fluorine atom or a fluorine containing substituent,
X^{A} is a single bond or a di- to decavalent group,
R^{Si} is a monovalent group containing a Si atom to which a hydroxyl group or a hydrolyzable group is bonded,
α1 is an integer of 1 to 9, and
β1 is an integer of 1 to 9.

2. The fluorine containing silane compound according to claim 1, wherein Rf is an aromatic group substituted with a fluorine atom, a fluoroalkyl group, a fluoroalkoxy group, R^{N}HN- or R^{N}₂N-, wherein R^{N} is fluoroalkyl.

3. The fluorine containing silane compound according to claim 1 or 2, wherein Rf is an aromatic group substituted with a fluorine atom.

4. The fluorine containing silane compound according to any one of claims 1 to 3, wherein Rf is an aromatic group substituted with a C₁₋₆ fluoroalkyl group or a C₁₋₆ fluoroalkoxy group, R^{N}HN- or R^{N}₂N-, wherein R^{N} is a fluoroalkyl group.

5. The fluorine containing silane compound according to any one of claims 1 to 4, wherein the aromatic group in Rf has a benzene ring, a naphthalene ring, a phenanthrene ring, an anthracene ring, a tetracene ring, a pentacene ring, a benzopyrene ring, a chrysene ring, a pyrene ring, a triphenylene ring, a corannulene ring, an ovalene ring, an indole ring, a furan ring, a thiophene ring, a pyrrole ring, a pyrazole ring, an imidazole ring, a pyridine ring, a pyridazine ring, a pyrimidine ring, a pyrazine ring, a biphenyl ring, a terphenyl ring, a triphenylmethane ring, or a benzophenone ring.

6. The fluorine containing silane compound according to any one of claims 1 to 5, wherein Rf is a phenyl group substituted with a fluorine atom, a C₁₋₆ fluoroalkyl group or a C₁₋₆ fluoroalkoxy group, R^{N}HN- or R^{N}₂N-, wherein R^{N} is a fluoroalkyl group.

7. The fluorine containing silane compound according to any one of claims 1 to 6, wherein X^{A} is represented by the following formula:
-X^{B}-X^{C}-X^{D}-X^{E}-X^{F}-
wherein
X^{B} is a single bond, a C₁₋₃₀ alkylene group, or a C₂₋₃₀ alkenylene group,
X^{C} is a single bond or a divalent group,
X^{D} is a divalent siloxane containing group, or group represented by the following formula:
-(CFH)ₐ-(CH₂)_{b}-(O)_{c}-
wherein
a is an integer of 0 to 200,
b is an integer of 0 to 200,
c is an integer of 0 to 200, and
the occurrence order of the respective repeating units enclosed in parentheses provided with a, b, and c is not limited,
X^{E} is a single bond or a divalent group, and
X^{F} is a single bond, a C₁₋₃₀ alkylene group, or a C₂₋₃₀ alkenylene group.

8. The fluorine containing silane compound according to claim 7, wherein
X^{C} is a single bond, an oxygen atom, a sulfur atom, an o-, m- or p-phenylene group, -CO-, -C(O)O-, -OC(O)-, - CONR⁵⁴-, -NR⁵⁴CO-, -O-CONR⁵⁴-, -NR⁵⁴CO-O-, -NR⁵⁴CONR⁵⁴-, - NR⁵⁴-, or -(CH₂)ₙ₅-,
R⁵⁴ is each independently at each occurrence a hydrogen atom or a monovalent organic group, and
n5 is each independently at each occurrence an integer of 1 to 30.

9. The fluorine containing silane compound according to claim 7 or 8, wherein
X^{E} is a single bond, an oxygen atom, a sulfur atom, an o-, m- or p-phenylene group, -CO-, -C(O)O-, -OC(O)-, - CONR₅₄-, -NR⁵⁴CO-, -O-CONR⁵⁴-, -NR⁵⁴CO-O-, -NR⁵⁴CONR⁵⁴-, - NR⁵⁴-, or -(CH₂)ₙ₅-,
R⁵⁴ is each independently at each occurrence a hydrogen atom or a monovalent organic group, and
n5 is each independently at each occurrence an integer of 1 to 30.

10. The fluorine containing silane compound according to any one of claims 7 to 9, wherein X^{D} is represented by the following formula: 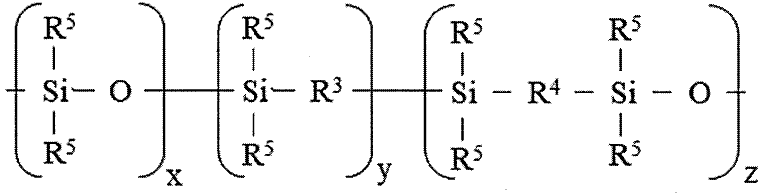 wherein
R³ is each independently a C₁₋₁₂ alkylene group, -R⁶-O-R⁶-, -R⁸-R⁷-R⁸-, -R⁸-R⁷-R⁹-R⁷-R⁸-, -R⁸-R⁷-R⁹-R⁶-R⁹-R⁷-R⁸-, or -R⁹-R⁶-R⁹-R⁷-R⁹-R⁶-R⁹-,
R⁴ is each independently a C₁₋₁₂ alkylene group, -R⁶-O-R⁶-, -R⁸-R⁷-R⁸-, -R⁸-R⁷-R⁹-R⁷-R⁸-, -R⁸-R⁷-R⁹-R⁶-R⁹-R⁷-R⁸-, or -R⁹-R⁶-R⁹-R⁷-R⁹-R⁶-R⁹-,
R⁶ is each independently a C₁₋₆ alkylene group,
R⁷ is each independently an optionally substituted phenylene group or naphthylene group,
R⁸ is each independently a single bond or a C₁₋₆ alkylene group,
R⁹ is each independently a single bond or an oxygen atom,
R⁵ is each independently a hydrocarbon group,
x is an integer of 0 to 200,
y is an integer of 0 to 200,
z is an integer of 0 to 200,
x + y + z is 1 or more, and
the occurrence order of the respective repeating units enclosed in parentheses provided with x, y, or z is not limited in the formula.

11. The fluorine containing silane compound according to any one of claims 7 to 9, wherein X^{D} is a group represented by the formula:
- (CFH)ₓ-(CH₂)_{y}-(O)_{z}-
wherein
x is an integer of 0 to 200,
y is an integer of 0 to 200,
z is an integer of 0 to 200, and
the occurrence order of the respective repeating units enclosed in parentheses provided with x, y, and z is not limited.

12. The fluorine containing silane compound according to any one of claims 7 to 9, wherein X^{D} is a C₁₋₃₆ alkylene group.

13. The fluorine containing silane compound according to any one of claims 7 to 9, wherein X^{D} is a group represented by the following formula:
-(OR⁶¹)_{f}-:
wherein
R⁶¹ is a C₁₋₆ alkylene group, and
f is an integer of 2 to 30.

14. The fluorine containing silane compound according to any one of claims 1 to 6, wherein X^{A} is each independently a group represented by the following: 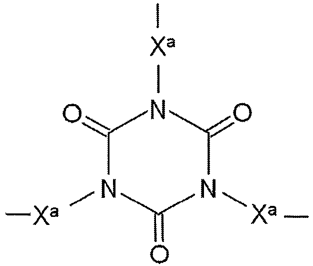 wherein X^{a} is a single bond or a divalent organic group.

15. The fluorine containing silane compound according to any one of claims 1 to 14, wherein R^{Si} is represented by the following formula (S1), (S2), (S3), (S4) or (S5): 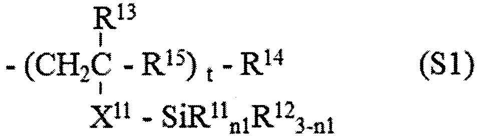
- SiR¹¹ₙ₁R¹²₃₋ₙ₁ (S2)
- SiR^{a1}ₖ₁R^{b1}ₗ₁R^{c1}ₘ₁ (S3)
- CR^{d1}ₖ₂R^{e1}ₗ₂^{Rf1}ₘ₂ (S4)
- NR^{g1}R^{h1} (S5)
wherein
R¹¹ is each independently a hydroxyl group or a hydrolyzable group,
R¹² is each independently a monovalent organic group,
n1 is each independently an integer of 0 to 3 for each (SiR¹¹ₙ₁R¹²₃₋ₙ₁) unit,
X¹¹ is each independently a single bond or a divalent organic group,
R¹³ is each independently a hydrogen atom or a monovalent organic group,
t is each independently an integer of 2 or more,
R¹⁴ is each independently a hydrogen atom, a halogen atom, or -X¹¹-SiR¹¹ₙ₁R¹²₃₋ₙ₁,
R¹⁵ is each independently a single bond, an oxygen atom, an alkylene group having 1 to 6 carbon atoms, or an alkyleneoxy group having 1 to 6 carbon atoms,
R^{a1} is each independently -Z¹-SiR²¹ₚ₁R²²_{q1}R²³ᵣ₁,
Z¹ is each independently a divalent organic group,
R²¹ is each independently -Z^{1'}-SiR^{21'}_{p1'}R^{22'}_{q1'}R^{23'}_{r1'},
R²² is each independently a hydroxyl group or a hydrolyzable group,
R²³ is each independently a monovalent organic group,
p1 is each independently an integer of 0 to 3,
q1 is each independently an integer of 0 to 3,
r1 is each independently an integer of 0 to 3,
Z^{1'} is each independently a divalent organic group,
R^{21'} is each independently -Z^{1"}-SiR^{22"}_{q1"}R^{23"}_{r1"},
R^{22'} is each independently a hydroxyl group or a hydrolyzable group,
R^{23'} is each independently a monovalent organic group,
p1' is each independently an integer of 0 to 3,
q1' is each independently an integer of 0 to 3,
r1' is each independently an integer of 0 to 3,
Z^{1"} is each independently a divalent organic group,
R^{22"} is each independently a hydroxyl group or a hydrolyzable group,
R^{23"} is each independently a monovalent organic group,
q1" is each independently an integer of 0 to 3,
r1" is each independently an integer of 0 to 3,
R^{b1} is each independently a hydroxyl group or a hydrolyzable group,
R^{c1} is each independently a monovalent organic group,
k1 is each independently an integer of 0 to 3,
l1 is each independently an integer of 0 to 3,
m1 is each independently an integer of 0 to 3,
provided that, in the formula (S3), at least two Si atoms to which a hydroxyl group or a hydrolyzable group is bonded are present,
R^{d1} is each independently -Z²-CR³¹ₚ₂R³²_{q2}R³³ ᵣ₂,
Z² is each independently a single bond, an oxygen atom, or a divalent organic group,
R³¹ is each independently -Z^{2'}-CR^{32'}_{q2'}R^{33'}_{r2'},
R³² is each independently -Z³-SiR³⁴ₙ₂R³⁵₃₋ₙ₂,
R³³ is each independently a hydrogen atom, a hydroxyl group, or a monovalent organic group,
p2 is each independently an integer of 0 to 3,
q2 is each independently an integer of 0 to 3,
r2 is each independently an integer of 0 to 3,
Z^{2'} is each independently a single bond, an oxygen atom, or a divalent organic group,
R^{32'} is each independently -Z³-SiR³⁴ₙ₂R³⁵₃₋ₙ₂,
R^{33'} is each independently a hydrogen atom, a hydroxyl group, or a monovalent organic group,
q2' is each independently an integer of 0 to 3,
r2' is each independently an integer of 0 to 3,
Z³ is each independently a single bond, an oxygen atom, or a divalent organic group,
R³⁴ is each independently a hydroxyl group or a hydrolyzable group,
R³⁵ is each independently a monovalent organic group,
n2 is each independently an integer of 0 to 3,
R^{e1} is each independently -Z³-SiR³⁴ₙ₂R³⁵₃₋ₙ₂,
R^{f1} is each independently a hydrogen atom, a hydroxyl group, or a monovalent organic group,
k2 is each independently an integer of 0 to 3,
l2 is each independently an integer of 0 to 3,
m2 is each independently an integer of 0 to 3,
provided that, in the formula (S4), at least two Si atoms to which a hydroxyl group or a hydrolyzable group is bonded are present,
R^{g1} and R^{h1} are each independently -Z⁴-SiR¹¹ₙ₁R¹²₃₋ₙ₁, - Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂, and
Z⁴ is each independently a single bond, an oxygen atom, or a divalent organic group,
provided that, in the formula (S5), at least two Si atoms to which a hydroxyl group or a hydrolyzable group is bonded are present.

16. The fluorine containing silane compound according to claim 1, wherein
Rf is C₆F₅-,
X^{A} is a C₁₁₋₃₀ alkylene group, or a group represented by the following formula:
-X^{C}-X^{D}-X^{E}-
wherein
X^{C} is -CONH-,
X^{D} is a C₈₋₃₀ alkylene group, and
X^{E} is -CO-,
R^{Si} is a group represented by the following formula (S2) or (S5):
- SiR¹¹ₙ₁R¹²₃₋ₙ₁ (S2)
-NR^{g1}R^{h1} (S5)
wherein
R¹¹ is each independently a hydroxyl group or a hydrolyzable group,
R¹² is each independently a monovalent organic group,
n1 is an integer of 1 to 3,
R^{g1} and R^{h1} are each independently -Z⁴-SiR¹¹ₙ₁R¹²₃₋ₙ₁, and
Z⁴ is a C₁₋₃₀ alkylene group,
α1 is 1, and
β1 is 1.

17. The fluorine containing silane compound according to claim 1, which is C₆F₅(CH₂)₁₈Si(OCH₃)₃, or
C₆F₅CONH(CH₂)₁₁CON(CH₂CH₂CH₂Si(OCH₃)₃)₂.

18. A surface-treating agent comprising the fluorine containing silane compound according to any one of claims 1 to 17.

19. The surface-treating agent according to claim 18, further comprising a condensed product of the fluorine containing silane compound according to any one of claims 1 to 17.

20. The surface-treating agent according to claim 18 or 19, which is for vacuum deposition.

21. The surface-treating agent according to claim 18 or 19, which is for wet coating.

22. A pellet comprising the surface-treating agent according to any one of claims 18 to 21.

23. An article comprising a substrate and a layer on the substrate, the layer being formed from the fluorine containing silane compound according to any one of claims 1 to 17.

24. The article according to claim 23, comprising an intermediate layer containing silicon oxide between the substrate and the layer.

25. The article according to claim 24, wherein the intermediate layer comprises alkali metal atoms.

26. The article according to claim 25, wherein at least a portion of the alkali metal atoms are sodium.

27. The article according to claim 25 or 26, which is an optical member.

28. The article according to claim 27, which is a display.
